# EUROPEAN PATENT APPLICATION

(11) **EP 4 546 098 A1**
(43) Date of publication of application: **30.04.2025**
(21) Application number: 24175430.8
(22) Date of filing: 13.05.2024
(51) Int. Cl.: G06F 3/0481, G06F 3/0486, G06F 3/04883, G06F 9/451

(54) **INTERFACE PROCESSING METHOD AND ELECTRONIC APPARATUS**

(30) Priority: 26.10.2023 CN 202311396825
(71) Applicant: Beijing Xiaomi Mobile Software Co., Ltd., Beijing 100085 (CN)
(72) Inventor: LI, Siqi, Beijing, 100085 (CN); YANG, Huiying, Beijing, 100085 (CN); LI, Jiayan, Beijing, 100085 (CN)
(74) Representative: Stöckeler, Ferdinand

(57) **Abstract**

An interface processing method includes: receiving a touch command based on a target application program; and switching a display state of the target application program from a first display state to a second display state in response to that the touch command conforms to a preset rule, wherein a window layout of the first display state is different from a window layout of the second display state.

## Description

### FIELD

The present invention relates to the field of electronic apparatuses, and more particularly, to an interface processing method and an electronic apparatus.

### BACKGROUND

As the pace of life speeds up, in order to facilitate daily work and learning, people may need to interact with a plurality of application programs installed in an electronic apparatus. In this case, it may be advantageous to display the application programs in a small window mode or a split screen mode. The display of the application programs in small windows or split screens is a new form of multi-tasking operation. The small window mode makes an application program display in a shrunk manner on an interface of another application program. The split screen mode divides a display screen of the electronic apparatus into a plurality of display areas, each of which is used to display one application program, and if a plurality of application programs are displayed in the split screen mode, display areas of split screens do not overlap. The purpose of multi-tasking collaboration can be achieved by the above two display modes.

### SUMMARY

The present invention provides an interface processing method and an electronic apparatus.

According to a first aspect of embodiments of the present invention, an interface processing method is provided. The interface processing method includes: receiving a touch command based on a target application program; and switching a display state of the target application program from a first display state to a second display state in response to that the touch command conforms to a preset rule, in which a window layout of the first display state is different from a window layout of the second display state.

In some embodiments of the present invention, receiving the touch command based on the target application program includes: receiving a drag command based on the target application program.

In some embodiments of the present invention, switching the display state of the target application program from the first display state to the second display state in response to that the touch command conforms to the preset rule includes: switching the display state of the target application program from the first display state to the second display state, in response to that an endpoint of a motion trajectory corresponding to the drag command is in a preset area of a screen of the electronic apparatus.

In some embodiments of the present invention, the interface processing method further includes: prompting the window layout of the second display state, in response to that the motion trajectory corresponding to the drag command enters the preset area.

In some embodiments of the present invention, the interface processing method further includes: displaying the window layout of the second display state through a mask layer area of a first preset dimension.

In some embodiments of the present invention, a size of the first preset dimension is associated with the window layout of the second display state.

In some embodiments of the present invention, the interface processing method further includes: displaying the target application program in a second preset dimension in response to executing the touch command.

In some embodiments of the present invention, receiving the drag command based on the target application program includes: receiving the drag command of a control displayed on the target application program; or receiving the drag command of a control on an icon of the target application program.

In some embodiments of the present invention, the interface processing method further includes: setting the window layout of the first display state and the window layout of the second display state according to the target application program.

In some embodiments of the present invention, the interface processing method further includes: setting the window layout of the first display state and the window layout of the second display state according to a type of the electronic apparatus.

In some embodiments of the present invention, the interface processing method further includes: determining a size of the preset area according to a type of the electronic apparatus.

In some embodiments of the present invention, an interface includes a plurality of preset areas, different preset areas corresponding to different display states; the first display state is that the target application program is in a closed mode, a small window mode, a split screen mode, or a full screen mode; and the second display state is that the target application program is in a small window mode, a split screen mode, or a full screen mode.

In some embodiments of the present invention, the interface includes a first area, a second area, and a third area; the first area is a preset area corresponding to the small window mode; the second area is a preset area corresponding to the split screen mode; and the third area is a preset area corresponding to the full screen mode.

In some embodiments of the present invention, switching the display state of the target application program from the first display state to the second display state, in response to that the endpoint of the motion trajectory corresponding to the drag command is in the preset area of the screen of the electronic apparatus includes: switching the display state of the target application program into the small window mode, in response to that the endpoint of the motion trajectory corresponding to the drag command is in the first area of the screen of the electronic apparatus; or switching the display state of the target application program into the split screen mode, in response to that the endpoint of the motion trajectory corresponding to the drag command is in the second area of the screen of the electronic apparatus; or switching the display state of the target application program into the full screen mode, in response to that the endpoint of the motion trajectory corresponding to the drag command is in the third area of the screen of the electronic apparatus.

In some embodiments of the present invention, the interface processing method further includes: switching a display state of a non-target application program from a third display state to a fourth display state in response to that the endpoint of the motion trajectory corresponding to the drag command is in the preset area of the screen of the electronic apparatus, in which a window layout of the third display state is different from a window layout of the fourth display state.

In some embodiments of the present invention, the third display state is that the non-target application is in the small window mode, the split screen mode, or the full screen mode, and the fourth display state is that the non-target application is in the small window mode, the split screen mode, the full screen mode, or the closed mode.

In some embodiments of the present invention, switching the display state of the non-target application program from the third display state to the fourth display state in response to that the endpoint of the motion trajectory corresponding to the drag command is in the preset area of the screen of the electronic apparatus includes: switching the display state of the non-target application program into a non-small window mode, in response to that the endpoint of the motion trajectory corresponding to the drag command is in the first area of the screen of the electronic apparatus; or switching the display state of the non-target application program into the small window mode or the split screen mode, in response to that the endpoint of the motion trajectory corresponding to the drag command is in the second area of the screen of the electronic apparatus; or switching the display state of the non-target application program into the closed mode, in response to that the endpoint of the motion trajectory corresponding to the drag command is in the third area of the screen of the electronic apparatus.

In some embodiments of the present invention, the interface processing method further includes: prompting that the target application program does not support the second display state, in case that the electronic apparatus does not support switching the display state of the target application program from the first display state to the second display state.

According to a second aspect of embodiments of the present invention, there is provided an electronic apparatus, including: a processor; and a memory for storing instructions executable by the processor. The processor is configured to execute the instructions in the memory to implement the interface processing method according to the first aspect of the present invention.

The interface processing method according to the present invention has the following beneficial effects. The present invention receives the touch command based on the target program, and when the touch command comply with the preset rule, the display state of the target application program is switched from the closed mode, the small window mode, or the split screen mode to the full screen mode, or from the closed mode, the split screen mode, or the full screen mode to the small window mode, or from the closed mode, the small window mode, or the full screen mode to the split screen mode. Users can achieve the switching of the display interface form of the application program through the touch operation, effectively improving the flexibility of switching the display interface form, meeting needs of users to obtain information displayed in different application programs at different times, and improving the interaction between electronic apparatuses and users.

It should be understood that the general description above and the detailed description later are only illustrative and explanatory and do not limit the present invention.

### BRIEF DESCRIPTION OF THE DRAWINGS

The accompanying drawings, which are incorporated in and constitute a part of this specification, illustrate embodiments consistent with the present invention and together with the description, serve to explain the principles of the present invention.
Fig. 1 is a flow chart of an interface processing method according to an embodiment of the present invention.
Fig. 2 is a flow chart of an interface processing method according to an embodiment of the present invention.
Fig. 3 is a schematic diagram of an interface processing method according to an embodiment of the present invention.
Fig. 4 is a schematic diagram of an interface processing method according to an embodiment of the present invention.
Fig. 5 is a flow chart of an interface processing method according to an embodiment of the present invention.
Fig. 6 is a schematic diagram of an interface processing method according to an embodiment of the present invention.
Fig. 7 is a schematic diagram of an interface processing method according to an embodiment of the present invention.
Fig. 8 is a flow chart of an interface processing method according to an embodiment of the present invention.
Fig. 9 is a flow chart of an interface processing method according to an embodiment of the present invention.
Fig. 10 is a flow chart of an interface processing method according to an embodiment of the present invention.
Fig. 11 is a schematic diagram of an interface processing method according to an embodiment of the present invention.
Fig. 12 is a schematic diagram of an interface processing method according to an embodiment of the present invention.
Fig. 13 is a schematic diagram of an interface processing method according to an embodiment of the present invention.
Fig. 14 is a schematic diagram of an interface processing method according to an embodiment of the present invention.
Fig. 15 is a flow chart of an interface processing method according to an embodiment of the present invention.
Fig. 16 is a flow chart of an interface processing method according to an embodiment of the present invention.
Fig. 17 is a flow chart of an interface processing method according to an embodiment of the present invention.
Fig. 18 is a schematic diagram of an interface processing method according to an embodiment of the present invention.
Fig. 19 is a schematic diagram of an interface processing method according to an embodiment of the present invention.
Fig. 20 is a flow chart of an interface processing method according to an embodiment of the present invention.
Fig. 21 is a schematic diagram of an interface processing method according to an embodiment of the present invention.
Fig. 22 is a flow chart of an interface processing method according to an embodiment of the present invention.
Fig. 23 is a schematic diagram of an interface processing method according to an embodiment of the present invention.
Fig. 24 is a schematic diagram of an interface processing method according to an embodiment of the present invention.
Fig. 25 is a schematic diagram of an interface processing method according to an embodiment of the present invention.
Fig. 26 is a schematic diagram of an interface processing method according to an embodiment of the present invention.
Fig. 27 is a schematic diagram of an interface processing method according to an embodiment of the present invention.
Fig. 28 is a schematic diagram of an interface processing method according to an embodiment of the present invention.
Fig. 29 is a schematic diagram of an interface processing method according to an embodiment of the present invention.
Fig. 30 is a schematic diagram of an interface processing method according to an embodiment of the present invention.
Fig. 31 is a schematic diagram of an interface processing method according to an embodiment of the present invention.
Fig. 32 is a schematic diagram of an interface processing method according to an embodiment of the present invention.
Fig. 33 is a flow chart of an interface processing method according to an embodiment of the present invention.
Fig. 34 is a schematic diagram of an interface processing method according to an embodiment of the present invention.
Fig. 35 is a schematic diagram of an interface processing method according to an embodiment of the present invention.
Fig. 36 is a schematic diagram of an interface processing method according to an embodiment of the present invention.
Fig. 37 is a schematic diagram of an interface processing method according to an embodiment of the present invention.
Fig. 38 is a flow chart of an interface processing method according to an embodiment of the present invention.
Fig. 39 is a flow chart of an interface processing method according to an embodiment of the present invention.
Fig. 40 is a schematic diagram of an interface processing method according to an embodiment of the present invention.
Fig. 41 is a schematic diagram of an interface processing method according to an embodiment of the present invention.
Fig. 42 is a schematic diagram of an interface processing method according to an embodiment of the present invention.
Fig. 43 is a flow chart of an interface processing method according to an embodiment of the present invention.
Fig. 44 is a schematic diagram of an interface processing method according to an embodiment of the present invention.
Fig. 45 is a schematic diagram of an interface processing method according to an embodiment of the present invention.
Fig. 46 is a flow chart of an interface processing method according to an embodiment of the present invention.
Fig. 47 is a schematic diagram of an interface processing method according to an embodiment of the present invention.
Fig. 48 is a schematic diagram of an interface processing method according to an embodiment of the present invention.
Fig. 49 is a block diagram of an interface processing device according to an embodiment of the present invention.
Fig. 50 is a block diagram of an electronic apparatus according to an embodiment of the present invention.

### DETAILED DESCRIPTION

Embodiments of the present invention are described in detail below, and examples of the embodiments are shown in accompanying drawings. In the description with reference to the drawings, unless otherwise indicated, the same numbers in different drawings indicate the same or similar elements. Embodiments described below do not represent all possible embodiments consistent with the present invention. Instead, they are only examples of devices and methods consistent with some aspects of the present invention as detailed in the attached claims.

At present, manners of entering a small window mode, a split screen mode, or a full screen mode mainly includes a button manner and a gesture manner. However, current mainstream manners of entering the small window mode, the split screen mode, and the full screen mode have a problem of complex operation. Due to the operation of switching display interface form is relatively complex, it is difficult for users to complete the switching of the display interface form with just a single touch action. Meanwhile, current mainstream manners of switching the display interface forms cannot fully cover the switching of all display interface forms. For example, users cannot directly switch the display interface of an application program from the full screen mode to the split screen mode, or cannot directly switch the display interface of the application program from the small window mode to the full screen mode. Therefore, users need to do a long learning process and familiarizing input processes before using the function. The learning cost for users is high and interactivity is poor, making it inconvenient for users to use.

In order to address the problem above, the present invention provides an interface processing method for tracking a motion corresponding to a touch command of user's finger on a screen. If the motion corresponding to the touch command of user finger on the screen meets a preset rule of the small window mode, a display state of a target application program is switched from any display state other than the small window mode to the small window mode. If the motion corresponding to the touch command of user's finger on the screen meets a preset rule of the split screen mode, the display state of the target application program is switched from any display state other than the split screen mode to the split screen mode. If the motion corresponding to the touch command of user's finger on the screen meets a preset rule of the full screen mode, the display state of the target application program is switched from any display state other than the full screen mode to the full screen mode. Due to the different display interface forms adopt the different preset rules, and the display state of the application program can be switched from any form to another form, which can cover the switching of all the forms of display interface, effectively improving the flexibility of switching the display interface form, meeting needs of users to obtain information displayed in different application programs at different times, and improving the interaction between electronic apparatuses and users.

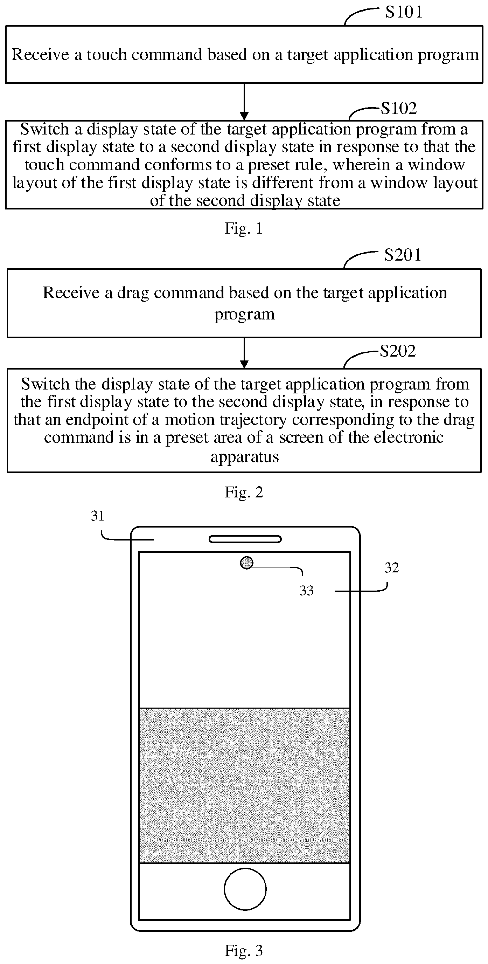

Embodiments of the present invention provide the interface processing method applied to the electronic apparatus. As shown in Fig. 1, the interface processing method according to the present invention includes the following steps.

S 101: a touch command based on a target application program is received.

In embodiments of the present invention, the electronic apparatus is a smart electronic apparatus with the target application program installed, which specifically can be a mobile phone, a tablet computer, a smart wearable equipment, etc. A control device of the electronic apparatus always maintains a communication connection with the screen to obtain the touch command of the user acting on the screen. When the user uses a finger or a stylus to operate on the screen, a fingertip or a pen tip will apply pressure to the screen to achieve the effect of command input. Therefore, the screen can receive the user's touch operation, and the screen will transmit the touch command corresponding to the touch operation to the control device for the control device subsequently to determine the display state of the application program based on the touch command. The control device, also known as a control chip of the electronic apparatus, has a data processing function, and an information and instruction sending and receiving function, etc.

In step S101, the screen of the electronic apparatus can receive the touch operation of the user based on the target application program, and transmitting the touch command corresponding to the touch operation based on the target application program to the control device of the electronic apparatus that establishes the communication connection with the screen. Due to the touch operation of the user acting on the screen includes three actions: finger departure from the screen (up event), finger touch on the screen (down event), and finger movement on the screen (move event). Each action corresponds to an event, and each event includes coordinate information. Therefore, the control device can determine the user's motion information on the screen through the finger or the stylus based on the received touch command containing a sequence of events.

S102: a display state of the target application program is switched from a first display state to a second display state, in response to that the touch command conforms to a preset rule, in which a window layout of the first display state is different from a window layout of the second display state.

In step S102, the control device of the electronic apparatus determines the motion information the user's touch operation according to the touch command, and judging whether the motion information complies with the preset rule. If the preset rules are complied, the control device controls the display device to switch the display state of the target application program from the first display state to the second display state, and the window layouts of the first display state and the second display state are different. The first display state of the target application program can be that the target application program is in the closed mode (i.e., closed mode below), the target application program is in the small window mode (i.e., small window mode below), the target application program is in the split screen mode (i.e., split screen mode below), or the target application program is in the full screen mode (i.e., full screen mode below). The second display state of the target application program can be that the target application is in the small window mode, the target application is in the split screen mode, or the target application is in the full screen mode. For example, the target application program can switch from the small window mode to the full screen mode, or from the full screen mode to the split screen mode. Therefore, users can freely switch the display interface form of the target application program through different touch operations.

In embodiments of the present invention, when the target application program is in an exit state or the display interface of the target application program is in a hidden state, the display state of the target application program can be considered as the closed mode.

The present invention receives the touch command based on the target program, and switching the display state of the target application program from the closed mode, the small window mode, or the split screen mode to the full screen mode, or from the closed mode, the split screen mode, or the full screen mode to the small window mode, or from the closed mode, the small window mode, or the full screen mode to the split screen mode when the touch command conforms to the preset rule. Users can achieve the switching of the display interface form of the application program through the touch operation, effectively improving the flexibility of switching the display interface form, meeting needs of users to obtain information displayed in different application programs at different times, and improving the interaction between electronic apparatuses and users.

Embodiments of the present invention provide an interface processing method applied to the electronic apparatus. As shown in Fig. 2, the interface processing method according to the present invention includes the following steps.

S201: a drag command based on the target application program is received.

In embodiments of the present invention, a control is provided on the target application program. When the user performs a drag operation of the control displayed on the target program through the screen of the electronic apparatus, the control device of the electronic apparatus can receive the drag command based on the target application program. The drag command refers to the touch command of the sequence of events of the down event, the move event, and the up event continuously detected by the screen of the electronic apparatus.

In some embodiments, when the display state of the target application program is in the closed mode, the control of the target application program can be the icon itself of the target application program. When the display state of the target application program is in the small window mode, the split screen mode, or the full screen mode, the control can be displayed in a predetermined position on the display interface of the target application program.

Taking a schematic interface diagram of the electronic apparatus shown in Fig. 3 as an example for illustration, the electronic apparatus shown in Fig. 3 is a terminal 31. The target application program displayed in the split screen mode in the screen of the terminal 31 is an application program 32. A control 33 is provided in the top middle of the display interface of the application program 32. When the user performs the drag operation of the control 33 displayed on the application program 32 through the screen of the electronic apparatus 31, the control device of electronic apparatus 31 can receive the drag command based on the application program 32.

Optionally, performing the drag operation on the icon of the target application program directly can cause a display position of the icon of the target application program on the screen of the electronic apparatus to move. In this case, the target application program will not enter the small window mode, the split screen mode, or the full screen mode. Therefore, the user can perform continuous operations of long pressing and dragging on the icon of the target application program through the screen of the electronic apparatus, so that the control device of the electronic apparatus can receive the drag command of the sequence of events that includes the two continuous operations of long pressing and dragging. Easy to understand, when the user performs the continuous operations of long pressing and dragging, the user's finger or stylus will not leave the screen of the electronic apparatus until the drag operation is completed.

S202: the display state of the target application program is switched from the first display state to the second display state, in response to that an endpoint of a motion trajectory corresponding to the drag command is in a preset area of a screen of the electronic apparatus.

In step S202, if the endpoint of the motion trajectory corresponding to the drag command is in the preset area corresponding to the small window mode on the screen of the electronic apparatus, the control device of the electronic apparatus can switch the display state of the target application program from the closed mode, the split screen mode, or the full screen mode to the small window mode. If the endpoint of the motion trajectory corresponding to the drag command is in the preset area corresponding to the split screen mode on the screen of the electronic apparatus, the control device of the electronic apparatus can switch the display state of the target application program from the closed mode, the small window mode, or the full screen mode to the split screen mode. If the endpoint of the motion trajectory corresponding to the drag command is in the preset area corresponding to the full screen mode on the screen of the electronic apparatus, the control device of the electronic apparatus can switch the display state of the target application program from the closed mode, the split screen mode, or the small window mode to the full screen mode.

In some embodiments, the area corresponding to the small window mode, the area corresponding to the split screen mode, and the area corresponding to the full screen mode in the screen of the electronic apparatus are areas non-overlapping with each other. Therefore, when the user performs the drag operation of the control of the target application program, the control device of the electronic apparatus can switch the display window of the target application program to a different form.

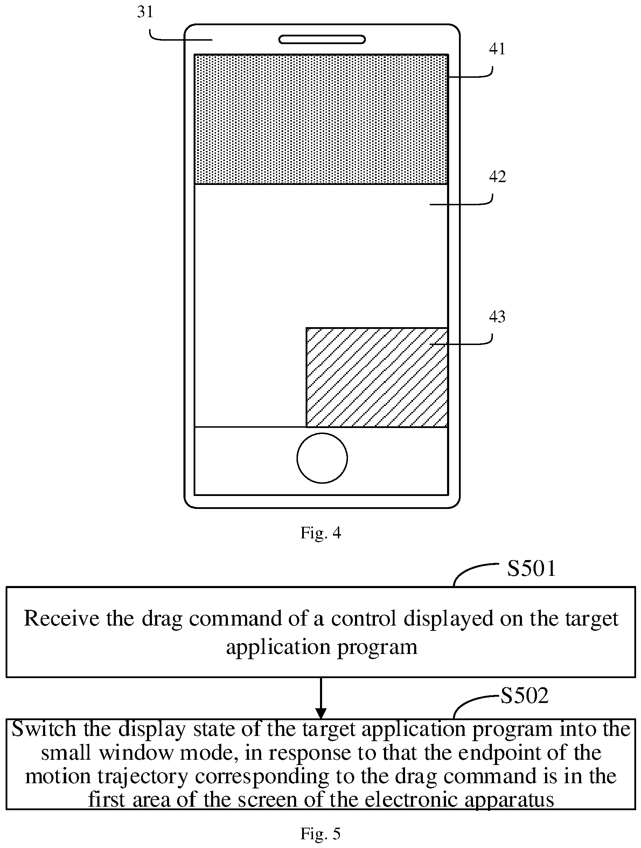

Taking a schematic interface diagram of the electronic apparatus shown in Fig. 4 as an example for illustration, the screen of an electronic apparatus 31 is divided into three preset areas, namely an area 41, an area 42, and an area 43. The area 41 is the preset area corresponding to the split screen mode in the screen of the electronic apparatus 31. The area 42 is the preset area corresponding to the full screen mode in the screen of the electronic apparatus 31. The area 43 is the preset area corresponding to the small window mode in the screen of the electronic apparatus 31. The area 41, the area 42, and the area 43 do not overlap with each other.

The switching process of the display interface form of the target application program in the screen of the electronic apparatus is equivalent to the process of user organizing and placing the target application program in the screen of the electronic apparatus. Therefore, in order to better meet the user's usage habits, the size, the shape, and the position of at least one display area in the area corresponding to the small window mode, the area corresponding to the split screen mode, and the area corresponding to the full screen mode on the screen of the electronic apparatus can be set by the user themselves.

The present invention receives the drag command of the control displayed on the target program, and switching the display state of the target application program from the closed mode, the small window mode, or the split screen mode to the full screen mode, or from the closed mode, the split screen mode, or the full screen mode to the small window mode, or from the closed mode, the small window mode, or the full screen mode to the split screen mode when the endpoint of the motion trajectory corresponding to the drag command is in the preset area of the screen of the electronic apparatus. Users can achieve the switching of the display interface of the application program by dragging the target application program to different areas on the screen of the electronic apparatus through the control displayed on the target application program, effectively improving the flexibility of switching the display interface form, meeting needs of users to obtain information displayed in different application programs at different times, and improving the interaction between electronic apparatuses and users.

Embodiments of the present invention provide an interface processing method applied to an electronic apparatus. As shown in Fig. 5, the interface processing method according to the present invention includes the following steps.

S501: the drag command based on the target application program is received.

Step S501 is the same as the implementation in the above embodiments and will not be detailed here.

S502: the display state of the target application program is switched into the small window mode, in response to that the endpoint of the motion trajectory corresponding to the drag command is in the first area of the screen of the electronic apparatus.

In the first scenario, the first display state of the target application program is the split screen mode.

In some embodiments, the user can perform the drag operation of the control displayed on the target application program through the screen, and drag the target application program to the first area of the screen of the electronic apparatus through the control displayed on the target application program. When the control device of the electronic apparatus receives the endpoint of the motion trajectory corresponding to the drag command from the user is in the first area, the display state of the target application program can be switched from the split screen mode to the small window mode.

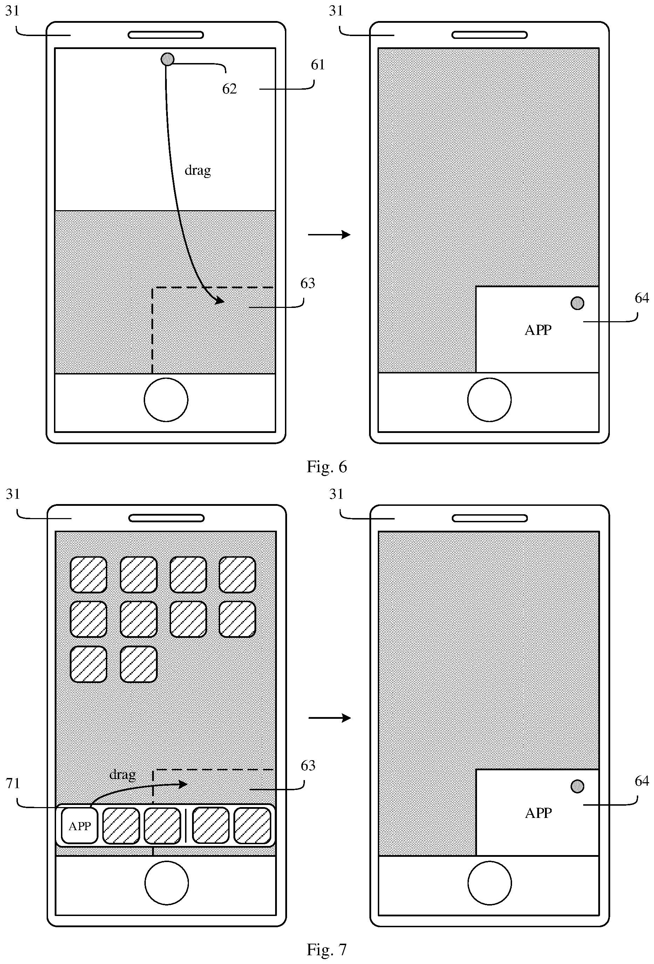

Taking a schematic interface diagram of the electronic apparatus shown in Fig. 6 as an example, the information currently displayed on the screen of the electronic apparatus 31 is the display interface of the target application program and a main interface. The target application program is an application program APP1. The current display state of the application program APP1 is the split screen mode. The display interface of the application program APP1 in the split screen mode is an interface 61. A control 62 is displayed on the interface 61. User can perform the drag operation of the control 62 displayed on the application program APP1 through the screen of the electronic apparatus 31, and drag the control 62 displayed on the application program APP1 to the first area, which is an area 63. The control device of the electronic apparatus 31 receives the drag command to the control 62 displayed on the application program APP1, and the endpoint of the motion trajectory corresponding to the drag command is in the area 63. The display state of the application program APP1 can be switched from the split screen mode to the small window mode, i.e., the display interface of the application program APP1 is switched from the interface 61 to an interface 64.

In the second scenario, the first display state of the target application program is the closed mode.

When the first display state of the target application program is the closed mode, the icon of the target application program will be displayed in the screen of the electronic apparatus. Therefore, in some embodiments, the user can perform the drag operation on the icon of the target application program through the screen, specifically, can perform continuous operations of long pressing and dragging on the icon of the target application program and drag the icon of the target application program to the first area of the screen of the electronic apparatus. When the control device of the electronic apparatus receives the endpoint of the motion trajectory corresponding to the drag command from the user is in the first area, the display state of the target application program can be switched from the closed mode to the small window mode.

Taking a schematic interface diagram of the electronic apparatus shown in Fig. 7 as an example, the information currently displayed on the screen of the electronic apparatus 31 is the main interface. The bottom of the screen displays a bottom sidebar of the application programs, which includes the target application program i.e., the application program APP1. User can perform continuous operations of long pressing and dragging on an icon 71 of the application program APP1 through the screen of the electronic apparatus 31, and drag the icon 71 of the application program APP1 to the first area, which is the area 63. The control device of the electronic apparatus 31 receives the drag command to the application program APP1, and the endpoint of the motion trajectory corresponding to the drag command is in the area 63. The display state of the application program APP1 can be switched from the closed mode to the small window mode, i.e., to the interface 64. At the same time, the display state of the bottom sidebar of the application programs can be switched to the closed mode, i.e., the bottom sidebar of the application program is hidden to prevent the bottom sidebar of the application program from obstructing the display interface of the application program APP1.

In the third scenario, the first display state of the target application program is the full screen mode.

In some embodiments, the user can perform the drag operation of the control displayed on the target application program through the screen, and drag the target application program to the first area of the screen of the electronic apparatus through the control displayed on the target application program. When the control device of the electronic apparatus receives the endpoint of the motion trajectory corresponding to the drag command from the user is in the first area, the display state of the target application program can be switched from the full screen mode to the small window mode.

The present invention receives the drag command of the control displayed on the target program. When the endpoint of the motion trajectory corresponding to the drag command is in the first area of the screen of the electronic apparatus, the display state of the target application program is switched from the split screen mode to the small window mode. When the endpoint of the motion trajectory corresponding to the drag command is in the first area of the screen of the electronic apparatus, the display state of the target application program is switched from the closed mode to the small window mode. When the endpoint of the motion trajectory corresponding to the drag command is in the first area of the screen of the electronic apparatus, the display state of the target application program is switched from the full screen mode to the small window mode. Users can switch the display interface of the target application program to the small window shape by dragging the target application program to the first area on the screen of the electronic apparatus through the control displayed on the target application program, effectively improving the flexibility of switching the display interface form, meeting needs of users to obtain information displayed in different application programs at different times, and improving the interaction between electronic apparatuses and users.

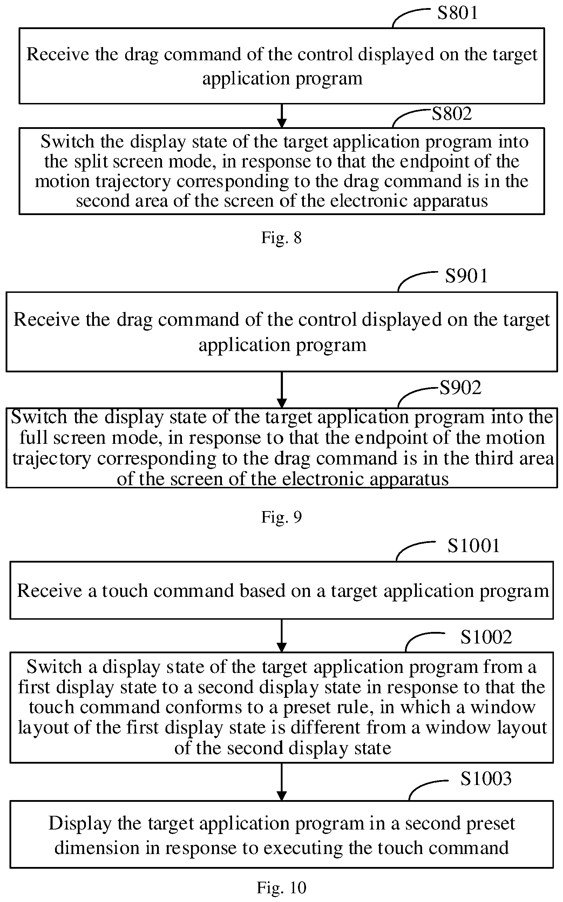

Embodiments of the present invention provide an interface processing method applied to the electronic apparatus. As shown in Fig. 8, the interface processing method according to the present invention includes the following steps.

S801: the drag command of the control displayed on the target application program is received.

Step S801 is the same as the implementation in the above embodiments and will not be detailed here.

S802: the display state of the target application program is switched into the split screen mode, in response to that the endpoint of the motion trajectory corresponding to the drag command is in the second area of the screen of the electronic apparatus.

In step S802, the first display state of the target application program is either the closed mode, the split screen mode, or the full screen mode. When the endpoint of the motion trajectory corresponding to the drag command is in the second area of the screen of the electronic apparatus, the display state of the target application program is switched from the closed mode, the small window mode, or the full screen mode to the split screen mode.

In the first scenario, the first display state of the target application program is the small window mode.

In some embodiments, the user can perform the drag operation of the control displayed on the target application program through the screen, and drag the target application program to the second area of the screen of the electronic apparatus through the control displayed on the target application program. When the control device of the electronic apparatus receives the endpoint of the motion trajectory corresponding to the drag command from the user is in the second area, the display state of the target application program can be switched from the small window mode to the split screen mode.

In the second scenario, the first display state of the target application program is the closed mode.

In some embodiments, the user can perform the drag operation on the icon of the target application program through the screen, specifically, can perform continuous operations of long pressing and dragging on the icon of the target application program and drag the icon of the target application program to the second area of the screen of the electronic apparatus. When the control device of the electronic apparatus receives the endpoint of the motion trajectory corresponding to the drag command from the user is in the second area, the display state of the target application program can be switched from the closed mode to the split screen mode.

In the third scenario, the first display state of the target application program is the full screen mode.

In some embodiments, the user can perform the drag operation of the control displayed on the target application program through the screen, and drag the target application program to the second area of the screen of the electronic apparatus through the control displayed on the target application program. When the control device of the electronic apparatus receives the endpoint of the motion trajectory corresponding to the drag command from the user is in the second area, the display state of the target application program can be switched from the full screen mode to the split screen mode.

The present invention receives the drag command of the control displayed on the target program. When the endpoint of the motion trajectory corresponding to the drag command is in the second area of the screen of the electronic apparatus, the display state of the target application program is switched from the small window mode to the split screen mode. When the endpoint of the motion trajectory corresponding to the drag command is in the second area of the screen of the electronic apparatus, the display state of the target application program is switched from the closed mode to the split screen mode. When the endpoint of the motion trajectory corresponding to the drag command is in the second area of the screen of the electronic apparatus, the display state of the target application program is switched from the full screen mode to the split screen mode. Users can switch the display interface of the target application program to the split screen mode by dragging the target application program to the second area on the screen of the electronic apparatus through the control displayed on the target application program, effectively improving the flexibility of switching the display interface form, meeting needs of users to obtain information displayed in different application programs at different times, and improving the interaction between electronic apparatuses and users.

Embodiments of the present invention provide an interface processing method applied to the electronic apparatus. As shown in Fig. 9, the interface processing method according to the present invention includes the following steps.

S901: the drag command of the control displayed on the target application program is received.

Step S901 is the same as the implementation in the above embodiments and will not be detailed here.

S902: the display state of the target application program is switched into the full screen mode, in response to that the endpoint of the motion trajectory corresponding to the drag command is in the third area of the screen of the electronic apparatus.

In step S902, the first display state of the target application program is either the closed mode, the split screen mode, or the full screen mode. When the endpoint of the motion trajectory corresponding to the drag command is in the third area of the screen of the electronic apparatus, the display state of the target application program is switched from the closed mode, the small window mode, or the full screen mode to the full screen mode.

In the first scenario, the first display state of the target application program is the small window mode.

In some embodiments, the user can perform the drag operation of the control displayed on the target application program through the screen, and drag the target application program to the third area of the screen of the electronic apparatus through the control displayed on the target application program. When the control device of the electronic apparatus receives the endpoint of the motion trajectory corresponding to the drag command from the user is in the third area, the display state of the target application program can be switched from the small window mode to the full screen mode.

In the second scenario, the first display state of the target application program is the closed mode.

In some embodiments, the user can perform the drag operation on the icon of the target application program through the screen, specifically, can perform continuous operations of long pressing and dragging on the icon of the target application program and drag the icon of the target application program to the third area of the screen of the electronic apparatus. When the control device of the electronic apparatus receives the endpoint of the motion trajectory corresponding to the drag command from the user is in the third area, the display state of the target application program can be switched from the closed mode to the full screen mode.

In the third scenario, the first display state of the target application program is the split screen mode.

In some embodiments, the user can perform the drag operation of the control displayed on the target application program through the screen, and drag the target application program to the third area of the screen of the electronic apparatus through the control displayed on the target application program. When the control device of the electronic apparatus receives the endpoint of the motion trajectory corresponding to the drag command from the user is in the third area, the display state of the target application program can be switched from the split screen mode to the full screen mode.

The present invention receives the drag command of the control displayed on the target program. When the endpoint of the motion trajectory corresponding to the drag command is in the third area of the screen of the electronic apparatus, the display state of the target application program is switched from the small window mode to the full screen mode. When the endpoint of the motion trajectory corresponding to the drag command is in the third area of the screen of the electronic apparatus, the display state of the target application program is switched from the closed mode to the full screen mode. When the endpoint of the motion trajectory corresponding to the drag command is in the third area of the screen of the electronic apparatus, the display state of the target application program is switched from the split screen mode to the full screen mode. Users can switch the display interface of the target application program to the full screen mode by dragging the target application program to the third area on the screen of the electronic apparatus through the control displayed on the target application program, effectively improving the flexibility of switching the display interface form, meeting needs of users to obtain information displayed in different application programs at different times, and improving the interaction between electronic apparatuses and users.

Embodiments of the present invention provide an interface processing method applied to an electronic apparatus. As shown in Fig. 10, the interface processing method according to the present invention includes the following steps.

S1001: a touch command based on a target application program is received.

Step S1001 is the same as the implementation in the above embodiments and will not be detailed here.

S1002: a display state of the target application program is switched from a first display state to a second display state in response to that the touch command conforms to a preset rule, in which a window layout of the first display state is different from a window layout of the second display state.

Step S1002 is the same as the implementation in the above embodiments and will not be detailed here.

S1003: the target application program is displayed in a second preset dimension in response to executing the touch command.

When the user performs the touch operation on the target application program through the screen of the electronic apparatus, the control device of the electronic apparatus will synchronously execute the touch command. In order to facilitate the user to touch the target application program, the control device of the electronic apparatus can reduce the size of the display interface of the target application program to the second preset dimension when the touch command is executed.

In embodiments of the present invention, the second preset dimension is smaller than the size of the display interface of the target application program in the small window mode, or smaller than the size of the display interface of the target application program in the split screen mode, or smaller than the size of the display interface of the target application program in the full screen mode.

Optionally, the second preset dimension corresponding to the display interface of the target application program in different display states can be different. For example, when the first display state of the target application program is the small window mode, the control device of the electronic apparatus can control the screen of the electronic apparatus to display the target application program of the second preset dimension corresponding to the small window mode during the touch command being executed. When the first display state of the target application program is the split screen mode, the control device of the electronic apparatus can control the screen of the electronic apparatus to display the target application program of the second preset dimension corresponding to the split screen mode during the touch command being executed.

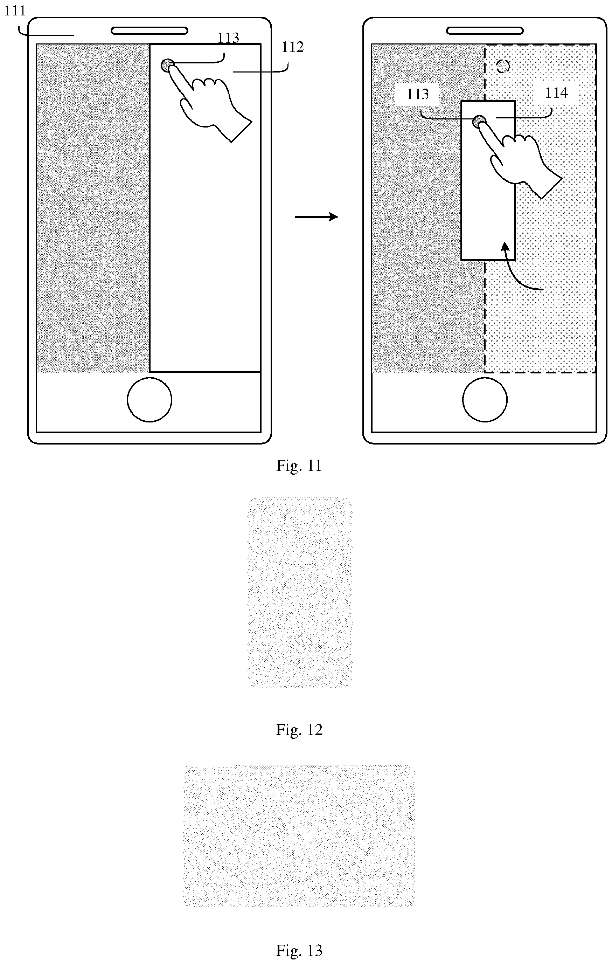

Taking a schematic interface diagram of the electronic apparatus shown in Fig. 11 as an example, the information currently displayed on the screen of an electronic apparatus 111 is the display interface of the target application program and the main interface. The target application program is APP11, which is displayed in the split screen mode. The display interface of the APP11 in the split screen mode is an interface 112. The control displayed on the interface 112 is a control 113. User can perform the drag operation of the control 113 displayed on the application program APP 11 through the screen of the electronic apparatus 111. When the control device of the electronic apparatus 111 receives and executes the drag command to the application program APP11, the application program APP11 is displayed in the second preset dimension, i.e., the dimension shown in an interface 114.

It is easy to understand that dimensions of screens of different electronic apparatuses are different, so the second preset dimension displayed by the target application program in the screen of different electronic apparatuses can also be different. For example, the second preset dimension corresponding to the target application program in the screen of a mobile phone can be 2.5cm * 5cm. The size of the preset area corresponding to the target application program in the split screen mode in the screen of a tablet computer can be 4cm * 8cm.

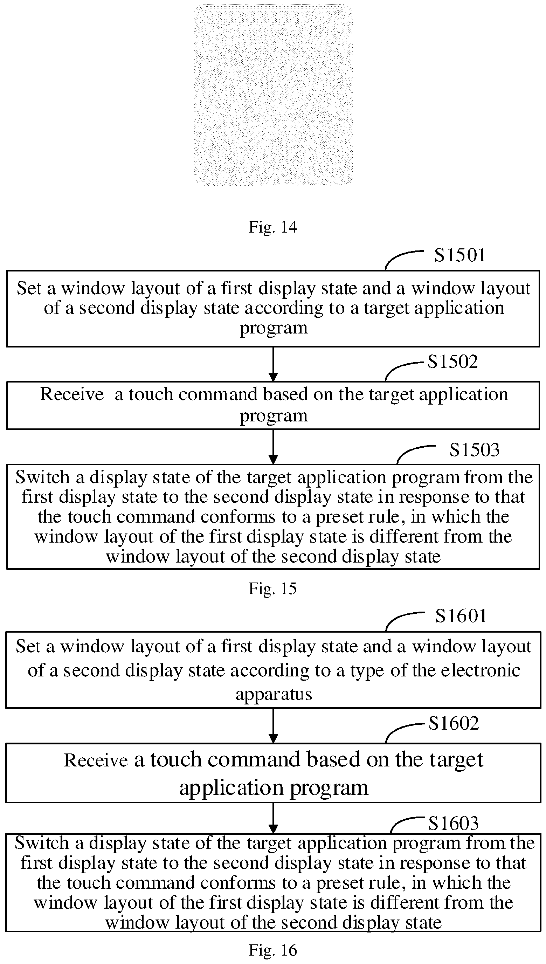

Figs. 12-14 show schematic diagrams of the second preset dimension of the display interface of the target application program. Fig. 12 shows the second preset dimension corresponding to the target application program when the motion trajectory corresponding to the drag command enters the first area. Fig. 13 shows the second preset dimension corresponding to the target application program when the motion trajectory corresponding to the drag command enters the second area. Fig. 14 shows the second preset dimension corresponding to the target application program when the motion trajectory corresponding to the drag command enters the third area.

The present invention receives the touch command based on the target program. When the touch command comply with the preset rule, the display state of the target application program is switched from the closed mode, the small window mode, or the split screen mode to the full screen mode, or from the closed mode, the split screen mode, or the full screen mode to the small window mode, or from the closed mode, the small window mode, or the full screen mode to the split screen mode. At the same time, the target application program is displayed in the second preset dimension when the touch command is executed. Users can achieve the switching of the display interface form of the application program through the touch operation, effectively improving the flexibility of switching the display interface form. The window layout of the display interface is reduced during the process of switching the display interface form process, which is more conducive to users completing the switching of the display interface form of the target application program, meeting needs of users to obtain information displayed in different application programs at different times, and improving the interaction between electronic apparatuses and users.

Embodiments of the present invention provide an interface processing method applied to an electronic apparatus. As shown in Fig. 15, the interface processing method according to the present invention includes the following steps.

S1501: a window layout of a first display state and a window layout of a second display state are set according to a target application program.

In order to achieve better user experience and avoid the display interface of the application program being too small to affect the normal use of the application program by users, some application programs may only support window layouts of a part of the display states. For example, application programs related to video playback may only support the small window mode and the full screen mode, and application programs related to office work may only support the split screen mode and the full screen mode. Therefore, in some embodiments of the present invention, the control device of the electronic apparatus may set the window layouts of the first display state and the second display state of the target application program according to the target application program, which prevents the target application program from switching to a display state i.e., not supported by the target application program when the target application program is switching the display form.

S1502: a touch command based on the target application program is received.

Step S1502 is the same as the implementation in the above embodiments and will not be detailed here.

S1503: a display state of the target application program is switched from the first display state to the second display state in response to that the touch command conforms to a preset rule, in which the window layout of the first display state is different from the window layout of the second display state.

Step S1503 is the same as the implementation in the above embodiments and will not be detailed here.

The present invention sets the window layouts of the first display state and the second display state of the target application program according to the target application program, and switching the display state of the target application program from the closed mode, the small window mode, or the split screen mode to the full screen mode, or from the closed mode, the split screen mode, or the full screen mode to the small window mode, or from the closed mode, the small window mode, or the full screen mode to the split screen mode when the touch command received based on the target program conforms to the preset rule. The present invention sets the window layouts of the first display state and the second display state of different application programs, allowing users to achieve the switching of the display interface form of the application program through the touch operation, effectively improving the flexibility of switching the display interface form, meeting the needs of users to obtain information displayed in different applications at different times, ensuring the user's experience of using the application program, and improving the interaction between electronic apparatuses and users.

Embodiments of the present invention provide an interface processing method applied to an electronic apparatus. As shown in Fig. 16, the interface processing method according to the present invention includes the following steps.

S1601: a window layout of a first display state and a window layout of a second display state are set according to a type of the electronic apparatus.

In order to achieve better user experience and avoid the display interface of the application program being too small to affect the normal use of the application program by users, some electronic apparatuses may only support window layouts of a part of the display states. For example, on tablet computers or personal computers, the target application program can support the small window mode, the split screen mode, and the full screen mode, while on mobile phones, the target application program may only support the small window mode and the split screen mode. Therefore, in some embodiments of the present invention, the control device of the electronic apparatus may set the window layouts of the first display state and the second display state of the target application program according to the type of electronic apparatus, which prevents the target application program from switching to a display state i.e., not supported by the target application program when the target application program is switching the display form.

S1602: a touch command based on the target application program is received.

Step S1602 is the same as the implementation in the above embodiments and will not be detailed here.

S1603, a display state of the target application program is switched from the first display state to the second display state in response to that the touch command conforms to a preset rule, in which the window layout of the first display state is different from the window layout of the second display state.

Step S1603 is the same as the implementation in the above embodiments and will not be detailed here.

The present invention sets the window layouts of the first display state and the second display state of the target application program according to the type of electronic apparatus, and switching the display state of the target application program from the closed mode, the small window mode, or the split screen mode to the full screen mode, or from the closed mode, the split screen mode, or the full screen mode to the small window mode, or from the closed mode, the small window mode, or the full screen mode to the split screen mode when the touch command received based on the target program conforms to the preset rule. The present invention sets the window layouts of the first display state and the second display state of different application programs according to the type of electronic apparatus, allowing users to achieve the switching of the display interface form of the application program through the touch operation, effectively improving the flexibility of switching the display interface form, meeting the needs of users to obtain information displayed in different applications at different times, ensuring the user's experience of using the application program, and improving the interaction between electronic apparatuses and users.

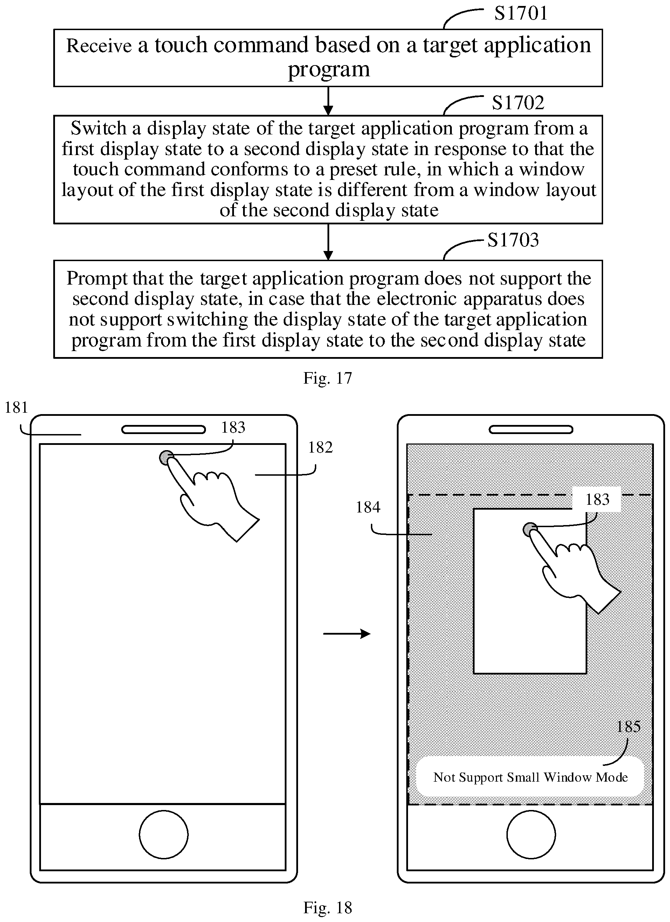

Embodiments of the present invention provide an interface processing method applied to an electronic apparatus. As shown in Fig. 17, the interface processing method according to the present invention includes the following steps.

S1701: a touch command based on a target application program is received.

Step S1701 is the same as the implementation in the above embodiments and will not be detailed here.

S1702: a display state of the target application program is switched from a first display state to a second display state in response to that the touch command conforms to a preset rule, in which a window layout of the first display state is different from a window layout of the second display state.

Step S1702 is the same as the implementation in the above embodiments and will not be detailed here.

S1703: it is prompted that the target application program does not support the second display state, in case that the electronic apparatus does not support switching the display state of the target application program from the first display state to the second display state.

If the electronic apparatus does not support the target application program to switch from the first display state to the second display state, the control device of the electronic apparatus can also prompt the user that the target application program does not support the second display state through an image, a text, a voice, and other means. For example, when the user drags the target application program to the first area through the screen of the electronic apparatus, if the target application program does not support the small window mode, the control device of the electronic apparatus can control the screen of the electronic apparatus to display an icon corresponding to "Not Support Small Window Mode", or display a text "Not Support Small Window Mode", or control a speaker of the electronic apparatus to play a prompt message such as "Not Support Small Window Mode".

Taking a schematic interface diagram of the electronic apparatus shown in Fig. 18 as an example, the information currently displayed on the screen of an electronic apparatus 181 the display interface of the target application program. The target application program is APP18, and the display interface of the APP18 in the full screen mode is an interface 182. The control displayed on the interface 182 is a control 183. The application program 18 does not support the small window mode. Users can perform the drag operation of the control 183 displayed on the application program APP18 through the screen of electronic apparatus 181. When the user drags the application program 18 to the first area of the screen of electronic apparatus 181, which is an area 184, through the screen of electronic apparatus 181, the control device of electronic apparatus 181 can control the screen of the electronic apparatus 181 to display a prompt window 185. The prompt window 185 can display a text "Not Support Small Window Mode", which indicates that the user cannot switch the display state of the application program 18 to the small window mode.

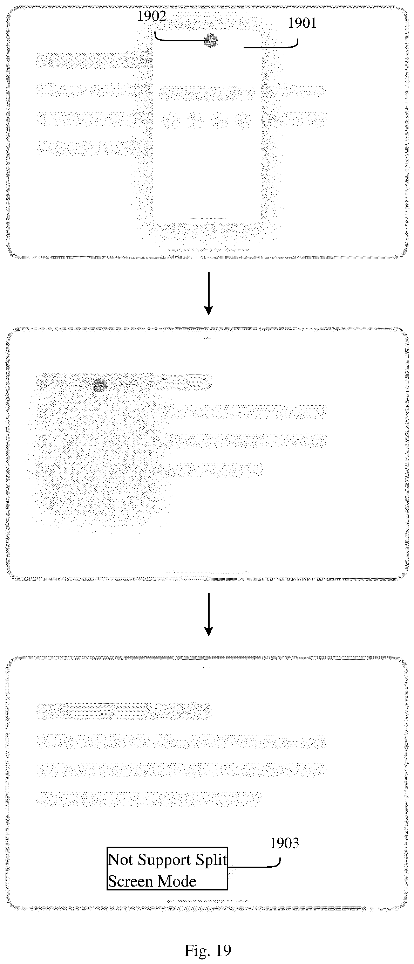

In the screen schematic diagram of the electronic apparatus shown in Fig. 19, the first display state of the target application program is the small window mode, and the display interface of the target application program in the small window mode is an interface 1901. When the user performs the drag operation of a control 1902 displayed on the interface 1901 through the screen of the electronic apparatus, the control device of the electronic apparatus can receive the drag command based on the target application program. When the motion trajectory of the drag command enters the second area, the control device of the electronic apparatus cannot switch the second display state of the target application program to the split screen mode according to the target application program or the type of the electronic apparatus, and cannot control the screen of the electronic apparatus to display a mask layer area corresponding to the second area. At the same time, it will control the screen of the electronic apparatus to display a prompt pop-up window 1903, which can display a text "Not Support Split Screen Mode".

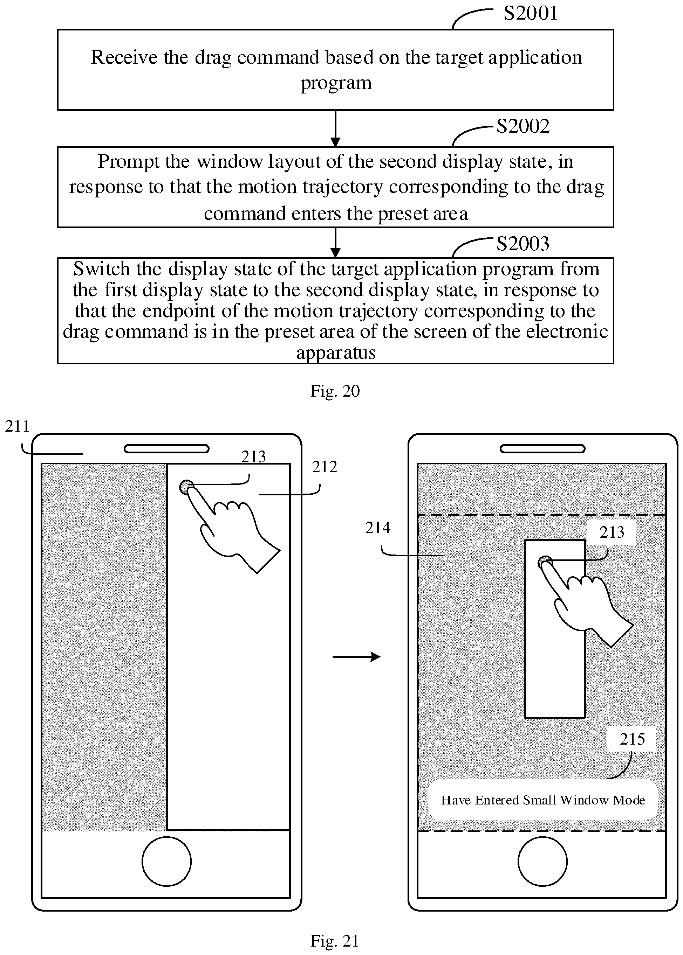

Embodiments of the present invention provide an interface processing method applied to an electronic apparatus. As shown in Fig. 20, the interface processing method according to the present invention includes the following steps.

S2001: the drag command based on the target application program is received.

Step S2001 is the same as the implementation in the above embodiments and will not be detailed here.

S2002: the window layout of the second display state is prompted, in response to that the motion trajectory corresponding to the drag command enters the preset area.

In order to reduce the learning cost for users and avoid the situation where users need to be familiar with the window layout of the target application program in different preset areas before they can proficiently switch the display state of the target application program, in some embodiments of the present invention, when the user drags the target application program to the preset area through the screen of the electronic apparatus, the control device of the electronic apparatus can detect the motion trajectory corresponding to the drag command entering the preset area and prompt the user with the window layout of the second display state of the target application program.

In some embodiments, the control device of the electronic apparatus can prompt the user that the target application program has been dragged to the preset area through an image, a text, a voice, and other means. For example, when the user drags the target application program to the first area through the screen of the electronic apparatus, the control device of the electronic apparatus can control the screen of the electronic apparatus to display an icon corresponding to "small window mode", or display a text "small window area", or control the speaker of the electronic apparatus to play a prompt message such as "entered the small window mode".

Taking a schematic interface diagram of the electronic apparatus shown in Fig. 21 as an example, the information currently displayed on the screen of an electronic apparatus 211 is the display interface of the target application program and the main interface. The target application program is APP21, which is displayed in the split screen mode. The display interface of the APP21 in the split screen mode is an interface 212, and the control displayed on the interface 212 is a control 213. Users can perform the drag operation of the control 213 displayed on the application program APP21 through the screen of the electronic apparatus 211. When the dragging trajectory to the application program APP21 enters the first area, i.e., an area 214, of the screen of the electronic apparatus 211 by the user through the screen of the electronic apparatus 211, the control device of the electronic apparatus 211 can control the screen of the electronic apparatus 211 to display a prompt window 215. The prompt window 215 can display a text "Have Entered Small Window Mode", which prompts the user that if releasing the finger or moving away the stylus, the display state of the application program 21 will switch to the small window mode.

S2003: the display state of the target application program is switched from the first display state to the second display state, in response to that the endpoint of the motion trajectory corresponding to the drag command is in the preset area of the screen of the electronic apparatus.

Step S2003 is the same as the implementation in the above embodiments and will not be detailed here.

The present invention receives the drag command of the control displayed on the target program, and when the motion trajectory corresponding to the drag command enters the preset area, prompting the window layout of the second display state of the target application program. Then, when the endpoint of the motion trajectory corresponding to the drag command is in the preset area of the screen of the electronic apparatus, the display state of the target application program is switched from the closed mode, the small window mode, or the split screen mode to the full screen mode, or from the closed mode, the split screen mode, or the full screen mode to the small window mode, or from the closed mode, the small window mode, or the full screen mode to the split screen mode. Users can achieve the switching of the display interface of the application program by dragging the target application program to different areas on the screen of the electronic apparatus through the control displayed on the target application program, effectively improving the flexibility of switching the display interface form. At the same time, during the process of dragging the target application program by the user, prompts are given to the user according to the position of the target application program dragged by the user on the screen of the electronic apparatus, reducing the learning cost for users and meeting needs of users to obtain information displayed in different application programs at different times, and improving the interaction between electronic apparatuses and users.

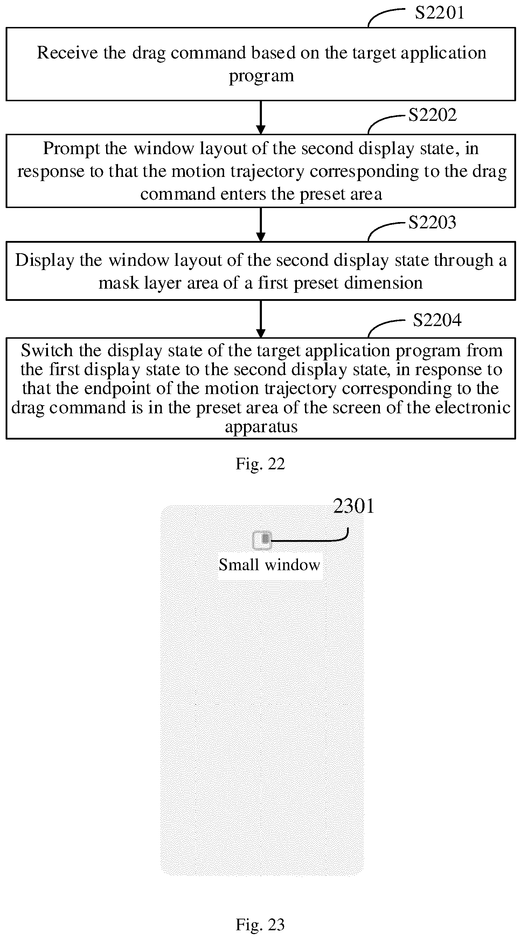

Embodiments of the present invention provide the interface processing method applied to the electronic apparatus. As shown in Fig. 22, the interface processing method according to the present invention includes the following steps.

S2201: the drag command based on the target application program is received.

Step S2201 is the same as the implementation in the above embodiments and will not be detailed here.

S2202: the window layout of the second display state is prompted, in response to that the motion trajectory corresponding to the drag command enters the preset area.

Step S2202 is the same as the implementation in the above embodiments and will not be detailed here.

S2203: the window layout of the second display state is displayed through a mask layer area of a first preset dimension.

In order to better reduce the learning cost for users and avoid the situation where users need to be familiar with the window layout of the target application program in different preset areas before they can proficiently switch the display state of the target application program, in some embodiments of the present invention, when the user drags the target application program to the preset area through the screen of the electronic apparatus, the control device of the electronic apparatus can detect the motion trajectory corresponding to the drag command entering the preset area, and display the window layout of the second display state through the mask layer area of the first preset dimension, so that the user can directly see the preset area where the target application program is currently located.

The mask layer, i.e., a semi-transparent display layer in the screen of the electronic apparatus, is displayed in a lower layer of the display interface of the target application program, which can provide a prompt to the user without affecting the user to watch other information on the screen of the electronic apparatus, having a good prompting effect.

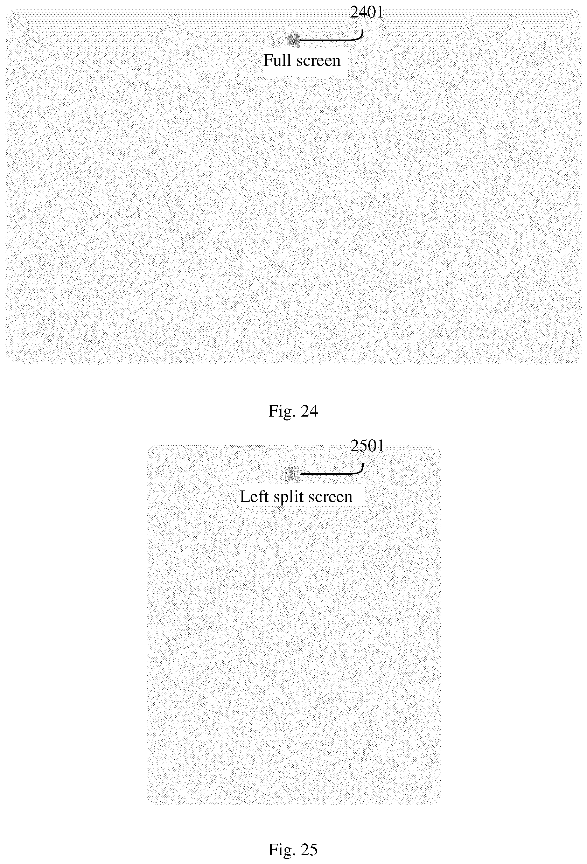

Fig. 23- Fig. 25 show schematic diagrams of the mask layer area. Fig. 23 is the mask layer area displayed on the screen of the electronic apparatus when the motion trajectory corresponding to the drag command enters the first area. A mask layer area 23 displays an icon 2301 corresponding to the small window mode and a prompt text "small window". Fig. 24 is the mask layer area displayed on the screen of the electronic apparatus when the motion trajectory corresponding to the drag command enters the third area. A mask layer area 24 displays an icon 2401 corresponding to the full screen mode and a prompt text "full screen". Fig. 25 is the mask layer area displayed on the screen of the electronic apparatus when the motion trajectory corresponding to the drag command enters the second area. A mask layer area 25 displays an icon 2501 corresponding to the split screen mode and a prompt text "split screen".

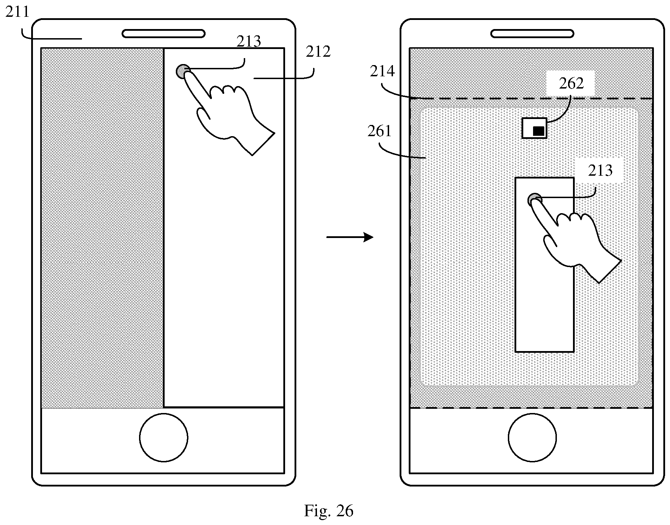

Taking a schematic interface diagram of the electronic apparatus shown in Fig. 26 as an example, the information currently displayed on the screen of the electronic apparatus is the display interface of the target application program and the main interface. The target application program is the APP21, which is displayed in the split screen mode. The display interface of the APP21 in the split screen mode is the interface 212, and the control displayed on the interface 212 is the control 213. Users can perform the drag operation of the control 213 displayed on the application program APP21 through the screen of the electronic apparatus 211. When the dragging trajectory to the application program APP21 enters the first area, i.e., an area 214, of the screen of the electronic apparatus 211 by the user through the screen of the electronic apparatus 211, the control device of the electronic apparatus 211 can control the screen of the electronic apparatus 211 to display the window layout of the small window mode in the mask layer area (i.e., a mask layer 261) of the first preset dimension and display an icon corresponding to "small window mode" in the mask layer 261, i.e., an icon 262, which prompts the user that if releasing the finger or moving away the stylus, the display state of the application program 21 will switch to the small window mode.

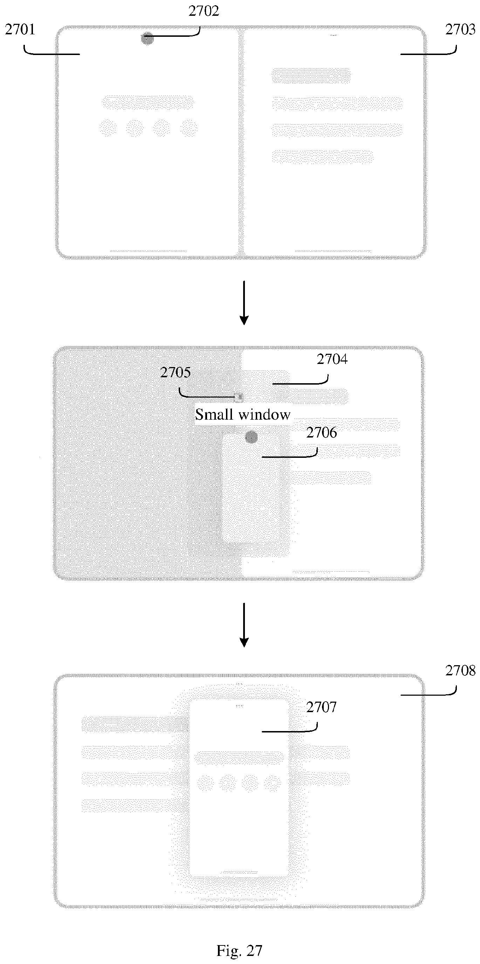

In the screen schematic diagram of a tablet computer shown in Fig. 27, both the target application program and a non-target application program are disposed in the split screen mode. An interface 2701 is the display interface of the target application program, and an interface 2703 is the display interface of the non-target application program. When the user performs the drag operation of a control 2702 displayed on the interface 2701 through the screen of the tablet computer, the control device of the tablet computer can control the screen of the tablet computer to display a mask layer area 2704 when the motion trajectory corresponding to the drag command enters the first area in the screen of the tablet computer, and displaying an icon 2705 and a prompt text "small window" of the first area in the mask area 2704. At the same time, the display interface of the target application program is displayed in the second preset dimension shown in 2706. After the user's finger leaves the screen of the tablet computer or the stylus is removed from the screen of the tablet computer, the control device of the tablet computer can determine that the endpoint of the motion trajectory corresponding to the drag command is in the first area, the display state of the target application program is switched to the small window mode, i.e., the display interface is switched from the interface 2706 to an interface 2707, and the display state of the non-target application program is switched to the full screen mode, i.e., the display interface is switched from the interface 2703 to an interface 2708.

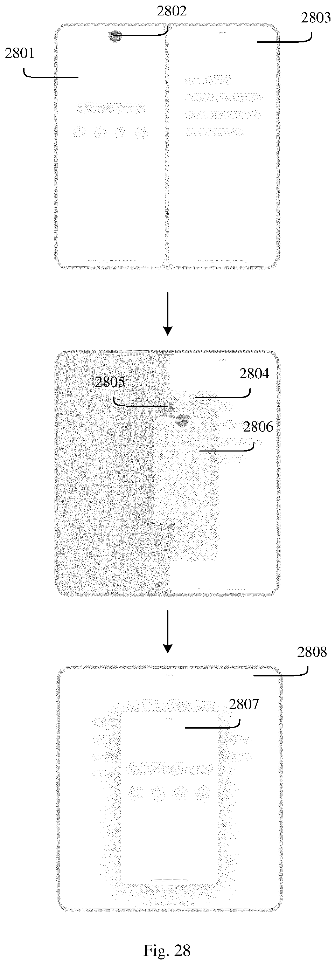

In the screen schematic diagram of a folding screen phone shown in Fig. 28, both the target application program and the non-target application program are disposed in the split screen mode. An interface 2801 is the display interface of the target application program, and an interface 2803 is the display interface of the non-target application program. When the user performs the drag operation of a control 2802 displayed on the interface 2801 through the screen of the folding screen phone, the control device of folding screen phone can control the screen of the folding screen phone to display a mask layer area 2804 when the motion trajectory corresponding to the drag command enters the first area in the screen of the folding screen phone, and displaying an icon 2805 and a prompt text "small window" of the first area in the mask area 2804. At the same time, the display interface of the target application program is displayed in the second preset dimension shown in 2806. After the user's finger leaves the screen of the folding screen phone or the stylus is removed from the screen of the folding screen phone, the control device of the folding screen phone can determine that the endpoint of the motion trajectory corresponding to the drag command is in the first area, the display state of the target application program is switched to the small window mode, i.e., the display interface is switched from the interface 2806 to an interface 2807, and the display state of the non-target application program is switched to the full screen mode, i.e., the display interface is switched from the interface 2803 to an interface 2808.

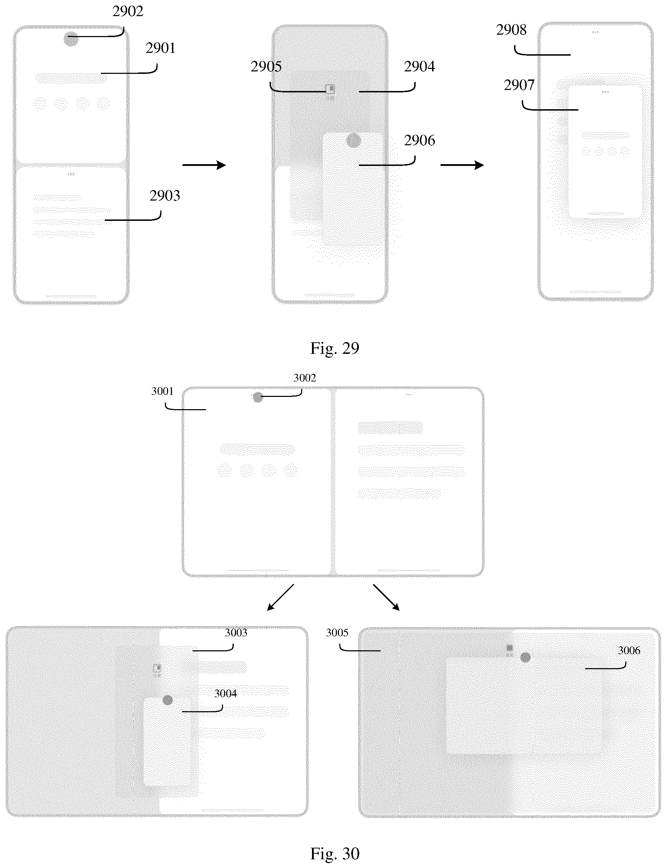

In the screen schematic diagram of a bar touchscreen phone shown in Fig. 29, both the target application program and a non-target application program are disposed in the split screen mode. An interface 2901 is the display interface of the target application program, and an interface 2903 is the display interface of the non-target application program. When the user performs the drag operation of a control 2902 displayed on the interface 2901 through the screen of the bar touchscreen phone, the control device of the bar touchscreen phone can control the screen of the bar touchscreen phone to display a mask layer area 2904 when the motion trajectory corresponding to the drag command enters the first area in the screen of the bar touchscreen phone, and displaying an icon 2905 and a prompt text "small window" of the first area in the mask area 2904. At the same time, the display interface of the target application program is displayed in the second preset dimension shown in 2906. After the user's finger leaves the screen of the bar touchscreen phone or the stylus is removed from the screen of the bar touchscreen phone, the control device of the bar touchscreen phone can determine that the endpoint of the motion trajectory corresponding to the drag command is in the first area, the display state of the target application program is switched to the small window mode, i.e., the display interface is switched from the interface 2906 to an interface 2907, and the display state of the non-target application program is switched to the full screen mode, i.e., the display interface is switched from the interface 2903 to an interface 2908.

In some embodiments, the size of the first preset dimension is associated with the window layout of the second display state. For example, the size of the first preset dimension can be slightly larger than the size of the window layout of the second display state, or slightly smaller than the size of the window layout of the second display state, and can also be the same as the size of the window layout of the second display state.

S2204: the display state of the target application program is switched from the first display state to the second display state, in response to that the endpoint of the motion trajectory corresponding to the drag command is in the preset area of the screen of the electronic apparatus.

In the screen schematic diagram of the electronic apparatus shown in Fig. 30, the first display state of the target application program is the split screen mode, and the display interface of the target application program in the split screen mode is an interface 3001. When the user performs the drag operation of a control 3002 displayed on the interface 3001 through the screen of the electronic apparatus, the control device of the electronic apparatus can receive the drag command based on the target application program. When the motion trajectory of the drag command enters the first area, the control device of the electronic apparatus can control the screen of the electronic apparatus to display a mask layer area 3003 with an icon and a prompt text of the small window mode. At the same time, the display interface of the target application program is displayed in the second preset dimension shown in 3004. When the motion trajectory of the drag command enters the third area, the control device of the electronic apparatus can control the screen of the electronic apparatus to display a mask layer area 3005 with an icon and a prompt text of the full screen mode. At the same time, the display interface of the target application program is displayed in the second preset dimension shown in 3006.

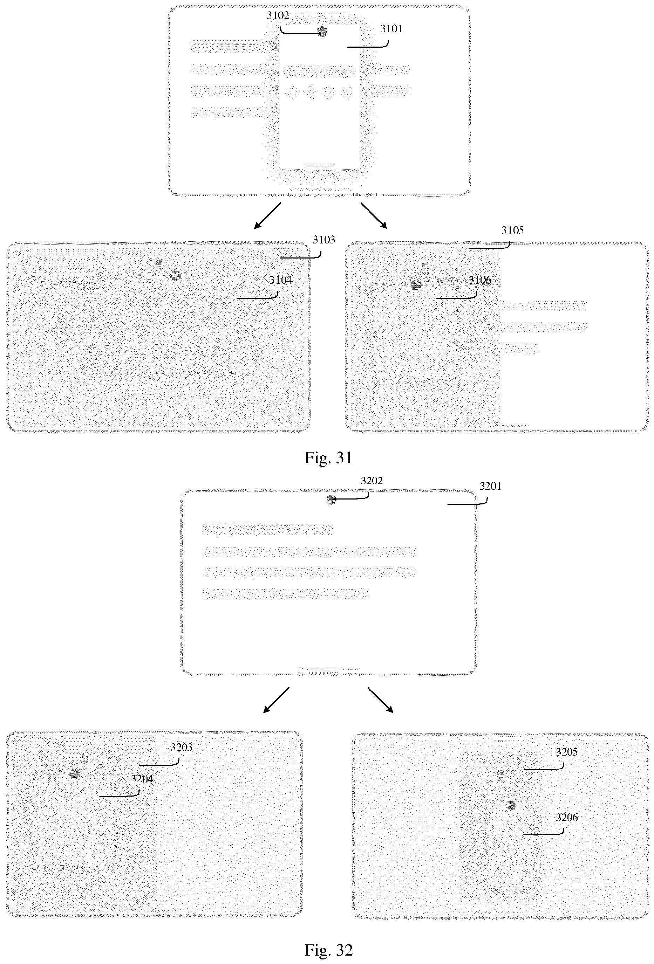

In the screen schematic of the electronic apparatus shown in Fig. 31, the first display state of the target application program is the small window mode, and the display interface of the target application program in the small window mode is an interface 3101. When the user performs the drag operation of a control 3102 displayed on the interface 3101 through the screen of the electronic apparatus, the control device of the electronic apparatus can receive drag command based on the target application program. When the motion trajectory of the drag command enters the third area, the control device of the electronic apparatus can control the screen of the electronic apparatus to display a mask layer area 3103 with an icon and a prompt text of the full screen mode. At the same time, the display interface of the target application program is displayed in the second preset size shown in 3104. When the motion trajectory of the drag command enters the second area, the control device of the electronic apparatus can control the screen of the electronic apparatus to display a mask layer area 3105 with an icon and a prompt text of the split screen mode. At the same time, the display interface of the target application program displayed in the second preset dimension shown in 3106.

In the screen schematic diagram of the electronic apparatus shown in Fig. 32, the first display state of the target application program is the full screen mode, and the display interface of the target application program in the full screen mode is an interface 3201. When the user performs the drag operation of a control 3202 displayed on the interface 3201 through the screen of the electronic apparatus, the control device of the electronic apparatus can receive drag command based on the target application program. When the motion trajectory of the drag command enters the second area, the control device of the electronic apparatus can control the screen of the electronic apparatus to display a mask layer area 3203 with an icon and a prompt text of the split screen mode. At the same time, the display interface of the target application program is displayed in the second preset size shown in 3204. When the motion trajectory of the drag command enters the first area, the control device of the electronic apparatus can control the screen of the electronic apparatus to display a mask layer area 3205 with an icon and a prompt text of the small window mode. At the same time, the display interface of the target application program displayed in the second preset dimension shown in 3206.

The present invention receives the drag command of the control displayed on the target program, and when the motion trajectory corresponding to the drag command enters the preset area, prompting the window layout of the second display state of the target application program. Then, when the endpoint of the motion trajectory corresponding to the drag command is in the preset area of the screen of the electronic apparatus, the display state of the target application program is switched from the closed mode, the small window mode, or the split screen mode to the full screen mode, or from the closed mode, the split screen mode, or the full screen mode to the small window mode, or from the closed mode, the small window mode, or the full screen mode to the split screen mode. Users can achieve the switching of the display interface of the application program by dragging the target application program to different areas on the screen of the electronic apparatus through the control displayed on the target application program, effectively improving the flexibility of switching the display interface form. At the same time, during the process of dragging the target application program by the user, the mask layer area of the first preset dimension is displayed on the screen of the electronic apparatus according to the position of the target application program dragged by the user on the screen of the electronic apparatus to prompt the user, reducing the learning cost for users and meeting needs of users obtain information displayed in different application programs at different times, and improving the interaction between electronic apparatuses and users.

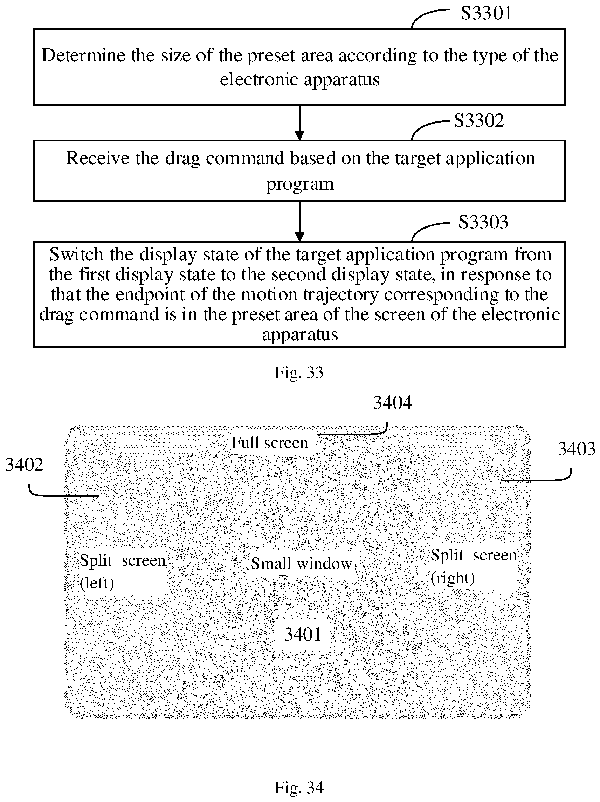

Embodiments of the present invention provide the interface processing method applied to the electronic apparatus. As shown in Fig. 33, the interface processing method according to the present invention includes the following steps.

S3301: the size of the preset area is determined according to the type of the electronic apparatus.

Dimensions of screens of different electronic apparatuses are different, so the size of the preset area corresponding to the target application program under the same display state in the screen of different electronic apparatuses can be different. In some embodiments of the present invention, the control device of the electronic apparatus can set at least one of the size of the first area, the size of the second area, and the size of the third area according to the type of electronic apparatus.

For example, when the type of electronic apparatus is a mobile phone, the control device of the electronic apparatus can set the size of the second area to 4cm*8cm. When the type of electronic apparatus is a tablet computer, the control device of the electronic apparatus can set the size of the second area to 6cm* 12cm.

Taking the electronic apparatus as the mobile phone as an example, the screen dimension of the mobile phone is usually small. Therefore, when the user performs the drag operation of the control displayed on the target application program through the screen of the mobile phone, they may only want to change the display position of the display interface of the target application program on the screen of the mobile phone, without switching the display state of the target application program to other states. Therefore, the control device of the mobile phone can set the size of the preset area corresponding to the target application program in one display state to be larger, and set the size of the preset area corresponding to display states besides the display state to be smaller.

Taking a schematic interface diagram of the electronic apparatus shown in Fig. 34 as an example, the electronic apparatus shown in Fig. 34 is the tablet computer. The screen schematic diagram of the tablet computer displays the preset area of the target application program on the screen of the tablet computer. An area 3401 is the first area, an area 3402 and an area 3403 are the second areas, and an area 3404 is the third area. Optionally, the area 3402 is the second area corresponding to the left split screen mode, and the area 3403 is the second area corresponding to the right split screen mode.

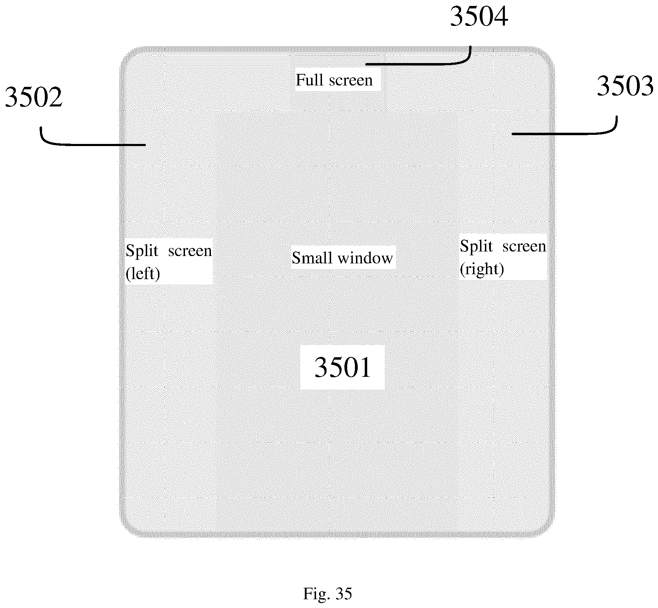

Taking a schematic interface diagram of the electronic apparatus shown in Fig. 35 as an example, the electronic apparatus shown in Fig. 35 is the folding screen phone. The screen schematic diagram of the folding screen phone displays the preset area of the target application program on the screen of the folding screen phone. An area 3501 is the first area, an area 3502 and an area 3503 are the second areas, and an area 3504 is the third area. Optionally, the area 3502 is the second area corresponding to the left split screen mode, and the area 3503 is the second area corresponding to the right split screen mode.

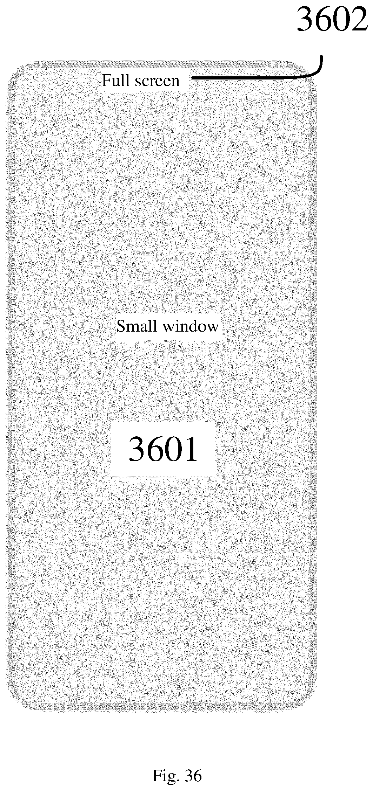

Taking a schematic interface diagram of the electronic apparatus shown in Fig. 36 as an example, the electronic apparatus shown in Fig. 36 is the bar touchscreen phone. The screen schematic diagram of the bar touchscreen phone displays the preset area of the target application program in the bar touchscreen phone. An area 3601 is the first area, and an area 3602 is the third area.

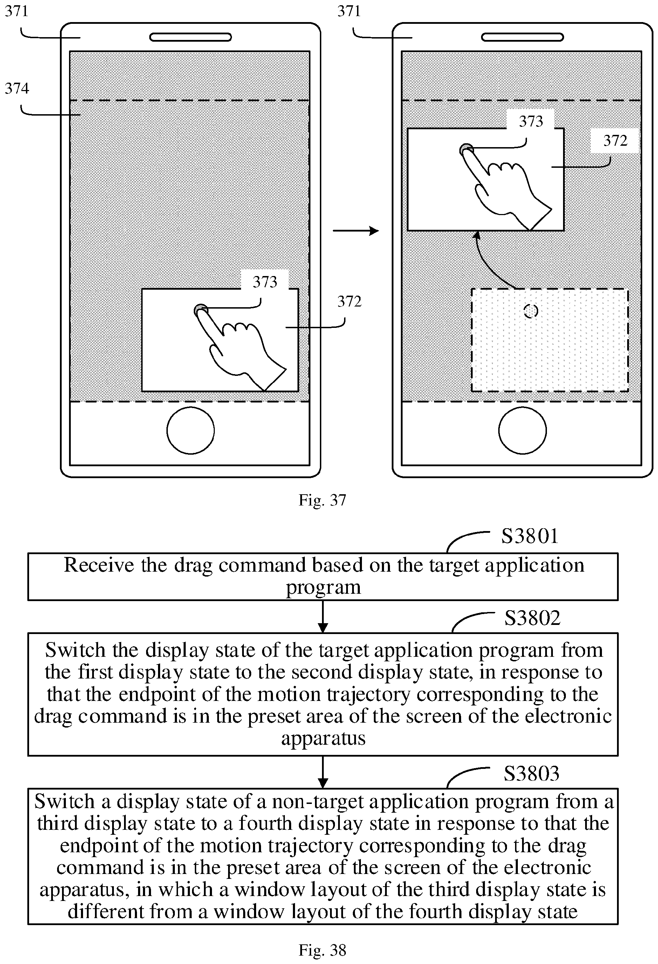

Another example, taking a schematic interface diagram of the electronic apparatus shown in Fig. 37 as an example, the information currently displayed on the screen of the electronic apparatus is the display interface of the target application program and the main interface. The target application program is APP37, which is displayed in the small window mode. The display interface of the APP37 in the small window mode is an interface 372, and the control displayed on the interface 372 is a control 373. The electronic apparatus shown in Fig. 37 is the mobile phone 371, and the first area in the small window mode on the screen of the mobile phone 371 is an area 374, which occupies most of the screen of the mobile phone 371. When users drag the control 373 displayed on the application 37 through the display screen of the mobile phone 371, if they do not want to switch the display state of the application 37 to the split screen mode or the full screen mode, but want to move the display position of the application 37, they can drag the control 373 displayed on the display interface 372 of the application 37 through the screen of mobile phone 371 to move the application 37. When the endpoint of the motion trajectory dragged by the user to the application 37 is within the area 374, the display state of the application 37 will always remain in the small window mode.

S3302: the drag command based on the target application program is received.

Step S3302 is the same as the implementation in the above embodiments and will not be detailed here.

S3303: the display state of the target application program is switched from the first display state to the second display state, in response to that the endpoint of the motion trajectory corresponding to the drag command is in the preset area of the screen of the electronic apparatus.

Step S3303 is the same as the implementation in the above embodiments and will not be detailed here.

The present invention determines the size of the preset area based on the type of electronic apparatus, and switching the display state of the target application program from the closed mode, the small window mode, or the split screen mode to the full screen mode, or from the closed mode, the split screen mode, or the full screen mode to the small window mode, or from the closed mode, the small window mode, or the full screen mode to the split screen mode when the endpoint of the motion trajectory corresponding to the touch command based on the target program is in the preset area of the screen of the electronic apparatus. The present invention allows users to switch the display interface form of the application program through the touch operation, effectively improving the flexibility of switching the display interface form and reducing the possibility of users accidentally switching the display state of the target application program when they do not want to switch the display state of the target application program. It meets the needs of users to obtain information displayed in different application programs at different times, ensuring the user's user experience of the application program, and improving the interaction between electronic apparatuses and users.

Embodiments of the present invention provide the interface processing method applied to the electronic apparatus. As shown in Fig. 38, the interface processing method according to the present invention includes the following steps.

S3801: the drag command based on the target application program is received.

Step S3801 is the same as the implementation in the above embodiments and will not be detailed here.

S3802: the display state of the target application program is switched from the first display state to the second display state, in response to that the endpoint of the motion trajectory corresponding to the drag command is in the preset area of the screen of the electronic apparatus.

Step S3802 is the same as the implementation in the above embodiments and will not be detailed here.

S3803: a display state of a non-target application program is switched from a third display state to a fourth display state in response to that the endpoint of the motion trajectory corresponding to the drag command is in the preset area of the screen of the electronic apparatus, in which a window layout of the third display state is different from a window layout of the fourth display state.

At least two application programs may be displayed on the screen of the electronic apparatus, respectively the target application program and at least one non-target application program. At the same time, the display state of the non-target application program should also change according to the changes in the display state of the target application program. In embodiments of the present invention, one target application program and one non-target application program are taken as an example for explanation.

The window layouts of the third display state and the fourth display state of the non-target application program are different. The third display state can be the small window mode, the split screen mode, or the full screen mode, and the fourth display state can be the split screen mode, the full screen mode, or the closed mode.

In the scenario of multi-tasking operation, if the display state of the target application program is the small window mode or the closed mode, the display state of the non-target application program can be the small window mode, the full screen mode, or the split screen mode. If the display state of the target application program is the split screen mode, the display state of the non-target application program is usually the split screen mode.

Therefore, in step S3803, when the endpoint of the motion trajectory corresponding to the drag command is in the first area of the screen of the electronic apparatus, the control device of the electronic apparatus can switch the display state of the non-target application program to a non-small window mode. When the endpoint of the motion trajectory corresponding to the drag command is in the second area of the screen of the electronic apparatus, the control device of the electronic apparatus can switch the display state of the non-target application program to the small window mode or the split screen mode. When the endpoint of the motion trajectory corresponding to the drag command is in the third area of the screen of the electronic apparatus, the control device of the electronic apparatus can switch the display state of the non-target application program to the closed mode.

If the endpoint of the motion trajectory corresponding to the drag command is in the area corresponding to the small window mode on the screen of the electronic apparatus, the control device of the electronic apparatus will switch the display state of the target application program from the closed mode to the small window mode. If the first display state of the non-target application program is the full screen mode or the split screen mode, the display state of the non-target application program will not change and will still be the full screen mode or the split screen mode. If the first display state of the non-target application program is the small window mode, the display state of the non-target application program will switch to the split screen mode or the full screen mode. When the control device of the electronic apparatus switches the display state of the target application program from the split screen mode to the small window mode, the display state of the non-target application program can be switched from the split screen mode to the full screen mode, or keep the split screen mode. Or when the control device of the electronic apparatus switches the display state of the target application program from the full screen mode to the small window mode, the screen of the electronic apparatus will not display the non-target application program, that is to say, the first display state and the second display state of the non-target application program are both in the closed mode.

If the endpoint of the motion trajectory corresponding to the drag command is in the area corresponding to the split screen mode on the screen of the electronic apparatus, the control device of the electronic apparatus will switch the display state of the target application program from the close mode to the split screen mode. If the current display state of the non-target application program is the split screen mode, the display state of the non-target application program will not change at this time. If the current display state of the non-target application program is the small window mode or the full screen mode, the display state of the non-target application program will switch to the split screen mode. When the control device of electronic apparatus switches the display state of the target application program from the small window mode to the split screen mode, if the current display state of the non-target application program is the split screen mode, the display state of the non-target application program will not change at this time. If the current display state of the non-target application program is the full screen mode, the display state of the non-target application program will switch to the split screen mode. When the control device of an electronic apparatus switches the display state of the target application program from the full screen mode to the split screen mode, the non-target application program will not be displayed on the screen of the electronic apparatus, that is to say, the first display state and the second display state of the non-target application program are both in the closed mode.

If the endpoint of the motion trajectory corresponding to the drag command is in the area corresponding to the full screen mode on the screen of the electronic apparatus, the control device of the electronic apparatus will switch the display state of the target application program from the closed mode to the full screen mode, and the display state of the non-target application program will switch from the small window mode, the split screen mode, or the full screen mode to the closed mode. When the control device of electronic apparatus switches the display state of the target application program from the split screen mode to the full screen mode, the display state of the non-target application program switches from the small window mode or the split screen mode to the closed mode. Or when the control device of an electronic apparatus switches the display state of the target application program from the small window mode to the full screen mode, the display state of non-target application programs switches from the split screen mode or the full screen mode to the closed mode.

The present invention receives the drag command of the control displayed on the target program, and switching the display state of the target application program from the closed mode, the small window mode, or the split screen mode to the full screen mode, or from the closed mode, the split screen mode, or the full screen mode to the small window mode, or from the closed mode, the small window mode, or the full screen mode to the split screen mode when the endpoint of the motion trajectory corresponding to the drag command is in the preset area of the screen of the electronic apparatus, while switching the display state of the non-target application program from the small window mode, the split screen mode, or the full screen mode to the full screen mode, the split screen mode, or the close mode. Users can drag the target application program to different areas on the screen of electronic apparatus or switch the display interface of the application by the dragging trajectory of the target application program through the control displayed on the target application program, effectively improving the flexibility of switching the display interface form, meeting needs of users to obtain information displayed in different application programs at different times, and improving the interaction between electronic apparatuses and users.

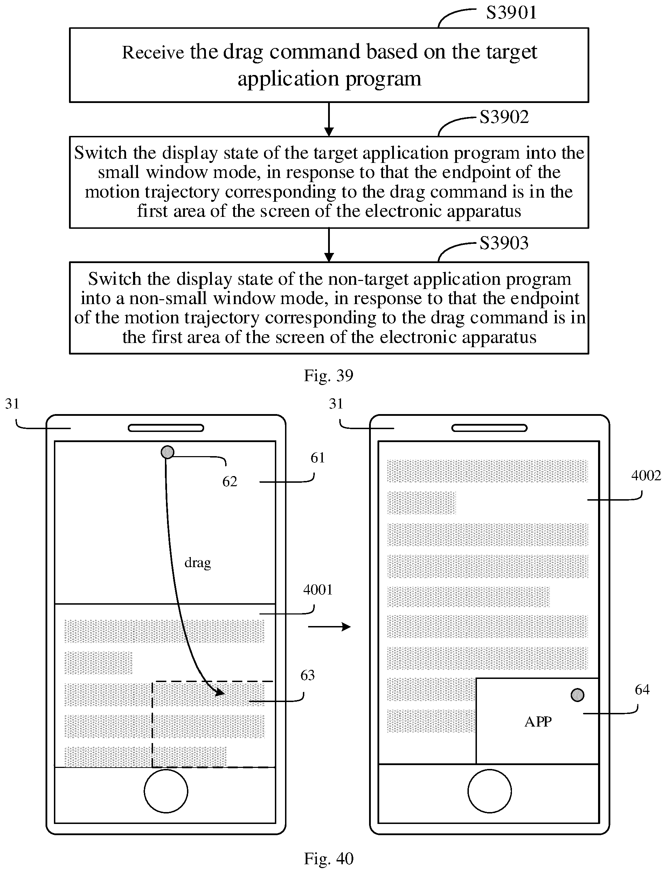

Embodiments of the present invention provide the interface processing method applied to the electronic apparatus. As shown in Fig. 39, the interface processing method according to the present invention includes the following steps.

S3901: the drag command based on the target application program is received.

Step S3901 is the same as the implementation in the above embodiments and will not be detailed here.

S3902: the display state of the target application program is switched into the small window mode, in response to that the endpoint of the motion trajectory corresponding to the drag command is in the first area of the screen of the electronic apparatus.

Step S3902 is the same as the implementation in the above embodiments and will not be detailed here.

S3903: the display state of the non-target application program is switched into a non-small window mode, in response to that the endpoint of the motion trajectory corresponding to the drag command is in the first area of the screen of the electronic apparatus.

In the first scenario, the first display state of the target application program is the split screen mode, and the second display state is the small window mode.

In some embodiments, the user can perform the drag operation of the control displayed on the target application program through the screen, and drag the target application program to the first area of the screen of the electronic apparatus through the control displayed on the target application program. When the control device of the electronic apparatus receives that the endpoint of the motion trajectory corresponding to the user's touch command is in the first area, it can switch the display state of the target application program from the split screen mode to the small window mode, and switch the display state of the non-target application program from the small window mode or the split screen mode to the full screen mode, or switch the display state of the non-target application program from the small window mode to the split screen mode.

Taking a schematic interface diagram of the electronic apparatus shown in Fig. 40 as an example, the information currently displayed on the screen of the electronic apparatus 31 is the display interface of the target application program and the display interface of the non-target application program. The target application program is an application program Appl. The current display state of the application program APP1 is the split screen mode. The display interface of the application program APP1 in the split screen mode is an interface 61. A control 62 is displayed on the interface 61. The non-target application program is an application program App2, and the current display state of the application program App 2 is also in the split screen mode. The display interface of the application program App2 in the split screen mode is 4001. Users can perform the drag operation of the control 62 displayed on the application program APP1 through the screen of electronic apparatus 31, and drag the control 62 displayed on the application program APP1 to the first area, which is an area 63. The control device of the electronic apparatus 31 receives the drag command to the control 62 displayed on the application program APP1, and the endpoint of the motion trajectory corresponding to the drag command is in the area 63. The display state of the application program APP1 can be switched from the split screen mode to the small window mode, i.e., the display interface of the application program APP1 is switched from the interface 61 to an interface 64. At the same time, the display state of the application program APP2 is switched from the split screen mode to the full screen mode, i.e., the display interface of the application program APP2 is switched from the interface 4001 to an interface 4002.

In the second scenario, the first display state of the target application program is the closed mode, and the second display state is the small window mode.

In this case, the third display state of the non-target application program can be the small window mode, the split screen mode, or the full screen mode. In some embodiments, the user can perform the drag operation on the icon of the target application program through the screen, specifically, can perform continuous operations of long pressing and dragging on the icon of the target application program and drag the icon of the target application program to the first area of the screen of the electronic apparatus. When the control device of the electronic apparatus receives that the endpoint of the motion trajectory corresponding to the user's touch command is in the first area, if the third display state of the non-target application program is the split screen mode, when the display state of the target application program switches from the closed mode to the small window mode, the display state of the non-target application program can be switched from the split screen mode to the full screen mode. Or, if the third display state of the non-target application program is the small window mode, when the display state of the target application program switches from the closed mode to the small window mode, the display state of the non-target application program can be switched from the small window mode to the split screen mode or the full screen mode. Or, if the display state of the non-target application program is the full screen mode, when the display state of the target application program switches from the closed mode to the small window mode, the display state of the non-target application program can be switched from the full screen mode to the split screen mode.

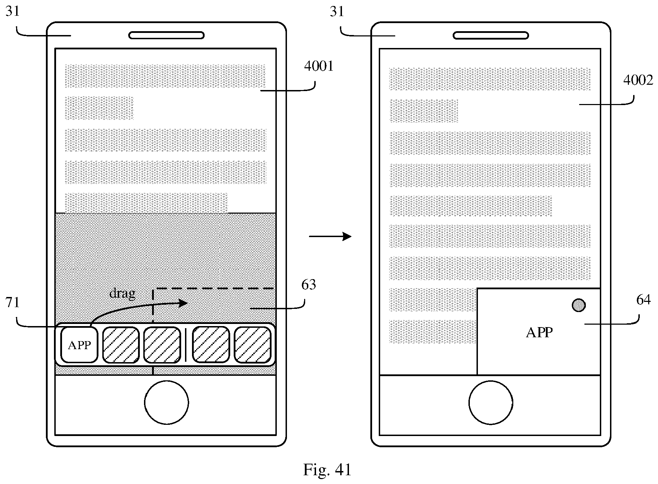

Taking a schematic interface diagram of the electronic apparatus shown in Fig. 41 as an example, the information currently displayed on the screen of the electronic apparatus 31 is the display interface of non-target application program and the main interface. The non-target application program is the application program APP2, and the display interface of the application program APP2 in the split screen mode is the interface 4001. The bottom of the screen displays the bottom sidebar of application programs, which includes the target application program, i.e., the application program APP1. User can perform continuous operations of long pressing and dragging on an icon 71 of the application program APP1 through the screen of the electronic apparatus 31, and drag the icon 71 of the application program APP1 to the first area, which is the area 63. The control device of the electronic apparatus 31 receives the drag command to the application program APP1, and the endpoint of the motion trajectory corresponding to the drag command is in the area 63. The display state of the application program APP1 can be switched from the closed mode to the small window mode, i.e., to the interface 64, and the display state of the application program APP2 can be switched from the split screen mode to the full screen mode, i.e., switching from the interface 4001 to the interface 4002. At the same time, the display state of the bottom sidebar of the application programs can be switched to the closed mode, i.e., the bottom sidebar of the application program is hidden to prevent the bottom sidebar of the application program from obstructing the display interface of the application program APP1.

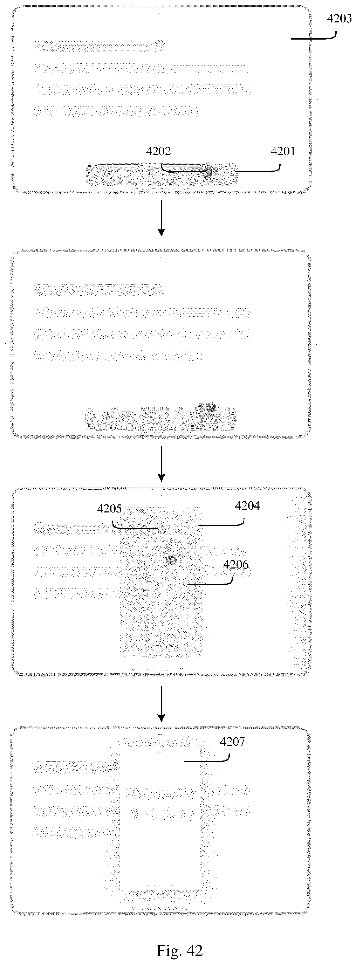

In the screen schematic diagram of a tablet computer shown in Fig. 42, the target application program is in the closed mode, while the non-target application program is in the full screen mode. An interface 4203 is the display interface of the non-target application program. When users perform the continuous operations of long pressing and dragging on an icon 4202 of the target application program in an bottom sidebar 4201 of the application program through the screen of the tablet computer, the control device of the tablet computer can control the screen of the tablet computer to display a mask layer area 4204 when the motion trajectory corresponding to the drag command enters the first area of the screen of the tablet computer, and displaying an icon 4205 and a prompt text "small window" of the first area in mask layer area 4204, while displaying the display interface of the target application program of the second preset dimension shown in 4206. After the user's finger leaves the screen of the tablet computer or the stylus is removed from the screen of the tablet computer, the control device of the tablet can determine that the endpoint of the motion trajectory corresponding to the drag command is in the first area, the display state of the target application program is switched to the small window mode, i.e., the display interface is switched from the interface 4206 to an interface 4207, while keeping the display state of the non-target application program unchanged, i.e., the display interface of the non-target application program is still the interface 4203.

It is easy to understand that in some embodiments, the control device of the electronic apparatus can also keep the display state of the non-target application program unchanged when the endpoint of the motion trajectory corresponding to the user's touch command is in the first area of the screen of the electronic apparatus. That is to say, if the current display state of the non-target application program is the split screen mode, the display state of the non-target application program still remains the split screen mode when the display state of the target application program switches from the closed mode to the small window mode. If the current display state of the non-target application program is in the full screen mode, the display state of the non-target application program still remains the full screen mode when the display state of the target application program switches from the closed mode to the small window mode.

In the third scenario, the first display state of the target application program is the full screen mode, and the second display state is the small window mode.

The display priority of the target application program is higher than that of the non-target application program or is the same as that of the non-target application program. Therefore, when the first display state of the target application program is the full screen mode, the non-target application program is usually not displayed on the screen of the electronic apparatus. That is to say, the third display state of the non-target application program is the closed mode. Therefore, the display state of the non-target application program does not change with the change of the display interface state of the target application program, and the fourth display state still is the closed mode.

The present invention receives the drag command of the control displayed on the target program. When the endpoint of the motion trajectory corresponding to the drag command is in the first area of the screen of the electronic apparatus, the display state of the target application program is switched from the split screen mode to the small window mode, while the display state of the non-target application program is switched from the split screen mode to the full screen mode. When the endpoint of the motion trajectory corresponding to the drag command is in the first area of the screen of the electronic apparatus, the display state of the target application program is switched from the closed mode to the small window mode, and the display state of the non-target application program is switched from the small window mode or the split screen mode to the full screen mode, or the display state of the non-target application program is switched from the small window mode or the full screen mode to the split screen mode. When the endpoint of the motion trajectory corresponding to the drag command is in the first area of the screen of the electronic apparatus, the display state of the target application program is switched from the full screen mode to the small window mode. The user switches the display interface of the target application program to the small window shape by dragging the target application program to the first area of the screen of the electronic apparatus through the control displayed on the target application program, and the display state of the non-target application program is determined based on the drag command, effectively improving the flexibility of switching the display interface form, meeting needs of users to obtain information displayed in different application programs at different times, and improving the interaction between electronic apparatuses and users.

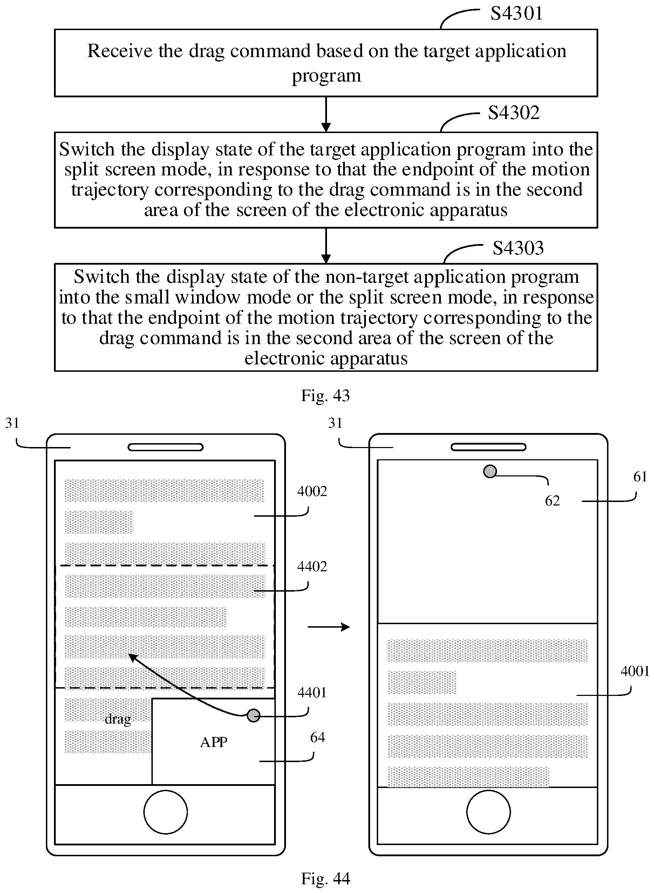

Embodiments of the present invention provide the interface processing method applied to the electronic apparatus. As shown in Fig. 43, the interface processing method according to the present invention includes the following steps.

S4301: the drag command based on the target application program is received.

Step S4301 is the same as the implementation in the above embodiments and will not be detailed here.

S4302: the display state of the target application program is switched into the split screen mode, in response to that the endpoint of the motion trajectory corresponding to the drag command is in the second area of the screen of the electronic apparatus.

Step S4302 is the same as the implementation in the above embodiments and will not be detailed here.

S4303: the display state of the non-target application program is switched into the small window mode or the split screen mode, in response to that the endpoint of the motion trajectory corresponding to the drag command is in the second area of the screen of the electronic apparatus.

In the first scenario, the first display state of the target application program is the small window mode, and the second display state is the split screen mode.

In some embodiments, the user can perform the drag operation of the control displayed on the target application program through the screen, and drag the target application program to the second area of the screen of the electronic apparatus through the control displayed on the target application program. When the control device of the electronic apparatus receives that the endpoint of the motion trajectory corresponding to the user's touch command is in the second area, and when the current display state of the non-target application program is the full screen mode, the display state of the non-target application program can be switched to the split screen mode. In some embodiments, when the current display state of the non-target application program is the split screen mode or the full screen mode, the display state of the non-target application program can be switched to the small window mode.

Taking a schematic interface diagram of the electronic apparatus shown in Fig. 44 as an example, the information currently displayed on the screen of the electronic apparatus 31 is the display interface of the target application program and the non-target application program. The target application program is the application program App 1, and the display interface of the application program App 1 in the small window mode is an interface 64. A control 4401 of the application program App 1 is displayed in the interface 64. The non-target application program is the application program App 2, and the display interface of the application program App 2 in the full screen mode is an interface 4002. Users can perform the drag operation of the control 4401 displayed on the application program APP1 through the screen of the electronic apparatus 31, and drag the control 4401 displayed on the application program APP1 to the second area, i.e., an area 4402. The control device of the electronic apparatus 31 receives the drag command to the application program APP1, and the endpoint of the motion trajectory included in the drag command is in the area 4402. The display state of the application program APP1 can be switched from the small window mode to the split screen mode, i.e., switching from the interface 64 to the interface 61, and the display state of the application program APP2 is switched from the full screen mode to the split screen mode, i.e., switching from the interface 4002 to the interface 4001.

It is easy to understand that in some embodiments, the control device of the electronic apparatus can also maintain the display state of the non-target application program unchanged when the endpoint of the motion trajectory corresponding to the user's drag command is in the second area of the screen of the electronic apparatus. That is to say, if the current display state of the non-target application program is the split screen mode, the display state of the non-target application program still remains the split screen mode when the display state of the target application program switches from the closed mode to the small window mode.

In the second scenario, the first display state of the target application program is the closed mode, and the second display state is the split screen mode.

In some embodiments, the user can perform the drag operation on the icon of the target application program through the screen, specifically, can perform continuous operations of long pressing and dragging on the icon of the target application program and drag the icon of the target application program to the second area of the screen of the electronic apparatus. When the control device of the electronic apparatus receives the endpoint of the motion trajectory corresponding to the drag command from the user is in the second area, the display state of the non-target application program can be switched from the small window mode or the full screen mode to the split screen mode, or the display state of the non-target application program can be switched from the split screen mode or the full screen mode to the small window mode.

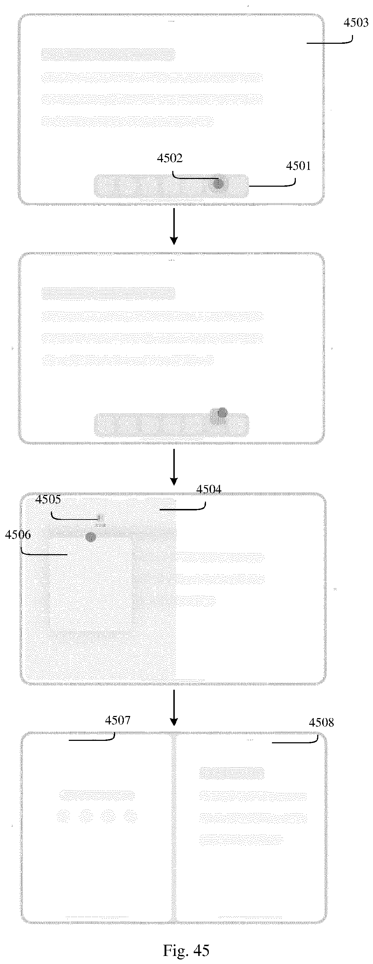

In the screen schematic diagram of a tablet computer shown in Fig. 45, the target application program is in the closed mode, and the non-target application program is in the full screen mode. An interface 4503 is the display interface of the non-target application program. When the user performs continuous operations of long pressing and dragging on an icon 4502 of the target application program in a bottom sidebar 4501 of the application program through the screen of the tablet computer, the control device of the tablet computer can control the screen of the tablet computer to display a mask layer area 4504 when the motion trajectory corresponding to the drag command enters the second area of the screen of the tablet computer, and displaying an icon 4505 and a prompt text "split screen" of the second area in the mask layer area 4504, while displaying the display interface of the target application program of the second preset dimension shown in 4506. After the user's finger leaves the screen of the tablet computer or the stylus is removed from the screen of the tablet computer, the control device of the tablet computer can determine that the endpoint of the motion trajectory corresponding to the drag command is in the second area. The display state of the target application program is switched to the split screen mode, i.e., the display interface is switched from the interface 4506 to an interface 4507. The display state of the non-target application program is switched to the split screen mode, i.e., the display interface is switched from the interface 4503 to an interface 4508.

It is easy to understand that in some embodiments, the control device of the electronic apparatus can also maintain the display state of the non-target application program unchanged when the endpoint of the motion trajectory corresponding to the user's drag command is in the second area of the screen of the electronic apparatus. That is to say, if the current display state of the non-target application program is the split screen mode, the display state of the target application program still remains the split screen mode when the display state of the target application program switches from the closed mode to the small window mode.

In the third scenario, the first display state of the target application program is the full screen mode, and the second display state is the split screen mode.

The display priority of the target application program is higher than that of the non-target application program or is the same as that of the non-target application program. Therefore, when the first display state of the target application program is full screen mode, the non-target application program is usually not displayed on the screen of the electronic apparatus. That is to say, the third display state of the non-target application program is the closed mode. Therefore, the display state of the non-target application program does not change with the change of the display interface state of the target application program, and the fourth display state still is the closed mode.

The present invention receives the drag command of the control displayed on the target program. When the endpoint of the motion trajectory corresponding to the drag command is in the second area of the screen of the electronic apparatus, and the current display state of the non-target application program is the full screen mode or the split screen mode, the display state of the target application program is switched from the small window mode to the split screen mode, while the display state of the non-target application program is switched from the full screen mode to the split screen mode, or the display state of the non-target application program is switched from the split screen mode or the full screen mode to the small window mode. When the endpoint of the motion trajectory included in the motion information corresponding to the drag command is in the second area of the screen of the electronic apparatus, and the current display state of the non-target application program is the small window mode, the split screen mode, or the full screen mode, the display state of the target application program is switched from the closed mode to the split screen mode, and the display state of the non-target application program is switched from the small window mode or the full screen mode to the split screen mode, or the display state of the non-target application program is switched from the split screen mode or the full screen mode to the small window mode. When the endpoint of the motion trajectory corresponding to the drag command is in the second area of the screen of the electronic apparatus, the display state of the target application program is switched from the full screen mode to the split screen mode. Users can drag the target application program to the second area of the screen of the electronic apparatus, or switching the display interface of the application program to the split screen mode by the dragging trajectory of the target application program through the control displayed on the target application program, and determining the display state of the non-target application program based on the drag command, effectively improving the flexibility of switching the display interface form, meeting needs of users to obtain information displayed in different application programs at different times, and improving the interaction between electronic apparatuses and users.

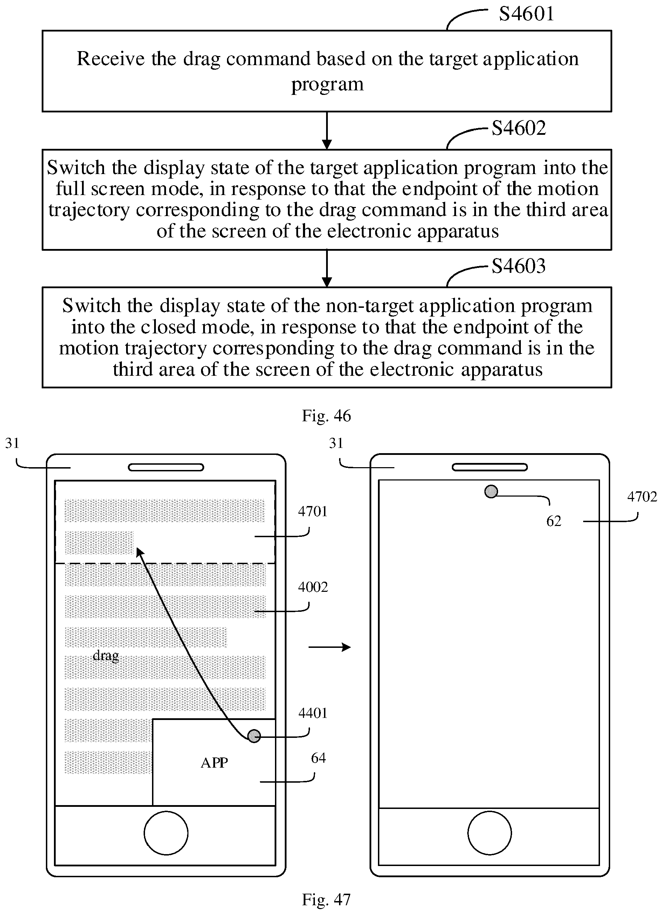

Embodiments of the present invention provide the interface processing method applied to the electronic apparatus. As shown in Fig. 46, the interface processing method according to the present invention includes the following steps.

S4601: the drag command based on the target application program is received.

Step S4601 is the same as the implementation in the above embodiments and will not be detailed here.

S4602: the display state of the target application program is switched into the full screen mode, in response to that the endpoint of the motion trajectory corresponding to the drag command is in the third area of the screen of the electronic apparatus.

Step S4602 is the same as the implementation in the above embodiments and will not be detailed here.

S4603: the display state of the non-target application program is switched into the closed mode, in response to that the endpoint of the motion trajectory corresponding to the drag command is in the third area of the screen of the electronic apparatus.

In the first scenario, the first display state of the target application program is the small window mode, and the second display state is the full screen mode.

In some embodiments, the user can perform the drag operation of the control displayed on the target application program through the screen, and drag the target application program to the third area of the screen of the electronic apparatus through the control displayed on the target application program. When the control device of the electronic apparatus receives the endpoint of the motion trajectory included in the user's operation command is in the third area, the display state of the non-target application program is switched from the split screen mode or the full screen mode to the closed mode.

Taking a schematic interface diagram of the electronic apparatus shown in Fig. 47 as an example, the information currently displayed on the screen of the electronic apparatus 31 is the display interfaces of the target application program and the non-target application program. The target application program is the application program App 1, and the display interface of the application program App 1 in small window mode is the interface 64. A control 4401 of the application program App 1 is displayed in the interface 64. The non-target application program is the application program App 2, and the display interface of the application program App 2 in the full screen mode is the interface 4002. Users can drag the control 4401 displayed on the application program APP1 through the screen of the electronic apparatus 31, and drag the control 4401 displayed on the application program APP1 to the third area, i.e., an area 4701. The control device of the electronic apparatus 31 receives the drag command to the application program APP1, and the endpoint of the motion trajectory included in the drag command is in the area 4701. The display state of the application program APP1 is switched from the small window mode to the full screen mode, i.e., switching from the interface 64 to an interface 4702, and the display state of the application program APP2 is switched from the full screen mode to the closed mode, i.e., switching from the interface 4402 to the closed mode.

In the second scenario, the first display state of the target application program is the closed mode, and the second display state is the full screen mode.

When the display state of the target application program is the closed mode, the display state of the non-target application program can be any state, i.e., the small window mode, the split screen mode, or the full screen mode. In some embodiments, the user can perform the drag operation on the icon of the target application program through the screen, specifically, performing the continuous operations of long pressing and dragging in the icon of the target application program, and drag the icon of the target application program to the third area of the screen of the electronic apparatus. When the control device of the electronic apparatus receives the endpoint of the motion trajectory included in the user's operation command is in the third area, the display state of the non-target application program is switched from the small window mode, the split screen mode, or the full screen mode to the closed mode.

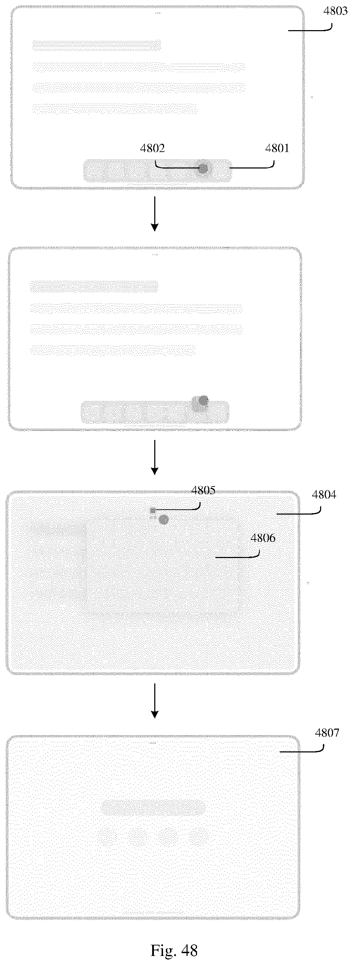

In the screen schematic diagram of a tablet computer shown in Fig. 48, the target application program is in the closed mode, and the non-target application program is in the full screen mode. An interface 4803 is the display interface for the non-target application program. When users perform the continuous operations of long pressing and dragging on an icon 4802 of the target application program in a bottom sidebar 4801 of the application program through the screen of the tablet computer, the control device of the tablet computer can control the screen of the tablet computer to display the mask layer area 4804 when the motion trajectory corresponding to the drag command enters the third area of the screen of the tablet computer, and displaying an icon 4805 and a prompt text "full screen" of the third area in the mask layer area 4804, while displaying the display interface of the target application program of the second preset dimension shown in 4806. After the user's finger leaves the screen of the tablet computer or the stylus is removed from the screen, the control device of the tablet computer can determine that the endpoint of the motion trajectory corresponding to the drag command is in the third area. The display state of the target application program is switched to the full screen mode, i.e., the display interface is switched from the interface 4806 to an interface 4807, and the display state of the non-target application program is switched to the closed mode.

In the third scenario, the first display state of the target application program is the split screen mode, and the second display state is the full screen mode.

In some embodiments, users can perform the drag operation of the control displayed on the target application program through the screen, and drag the target application program to the third area of the screen of the electronic apparatus through the control displayed on the target application program. When the control device of the electronic apparatus receives the endpoint of the motion trajectory included in the user's operation command is in the third area, the display state of the non-target application program is switched from the small window mode or the split screen mode to the closed mode.

The present invention receives the drag command of the control displayed on the target program. When the endpoint of the motion trajectory included in the motion information corresponding to the drag command is in the third area of the screen of the electronic apparatus, or when the motion trajectory included in the motion information conforms to a seventh motion trajectory, the display state of the target application program is switched from the small window mode to the full screen mode, and the display state of the non-target application program is switched from the split screen mode or the full screen mode to the closed mode. When the endpoint of the motion trajectory included in the motion information corresponding to the drag command is in the third area of the screen of the electronic apparatus, or when the motion trajectory included in the motion information conforms to a eighth motion trajectory, the display state of the target application program from closed mode to full screen mode, and switch the display state of non-target application programs is switched from the small window mode, the split screen mode, or the full screen mode to the closed mode. When the endpoint of the motion trajectory included in the motion information corresponding to the drag command is in the third area of the screen of the electronic apparatus, or when the motion trajectory included in the motion information conforms to a ninth motion trajectory, the display state of the target application program is switched from the split screen mode to the full screen mode, and the display state of the non-target application program is switched from the small window mode or the split screen mode to the closed mode. Users can drag the target application program to the third area of the screen of the electronic apparatus through the control displayed on the target application program, or switching the display interface of the application program to the full screen mode by the dragging trajectory of the target application program, and determining the display state of the non-target application program based on the drag command, effectively improving the flexibility of switching the display interface form, meeting needs of users to obtain information displayed in different application programs at different times, and improving the interaction between electronic apparatuses and users.

It is easy to understand that in embodiments of the present invention, when the display state of the target application program is the small window mode and the display state of the non-target application program is the split screen mode, or when the display state of the target application program is the split screen mode and the display state of the non-target application program is the full screen mode, the display interface of the target application program and the display interface of the non-target application program do not overlap or only partially overlap.

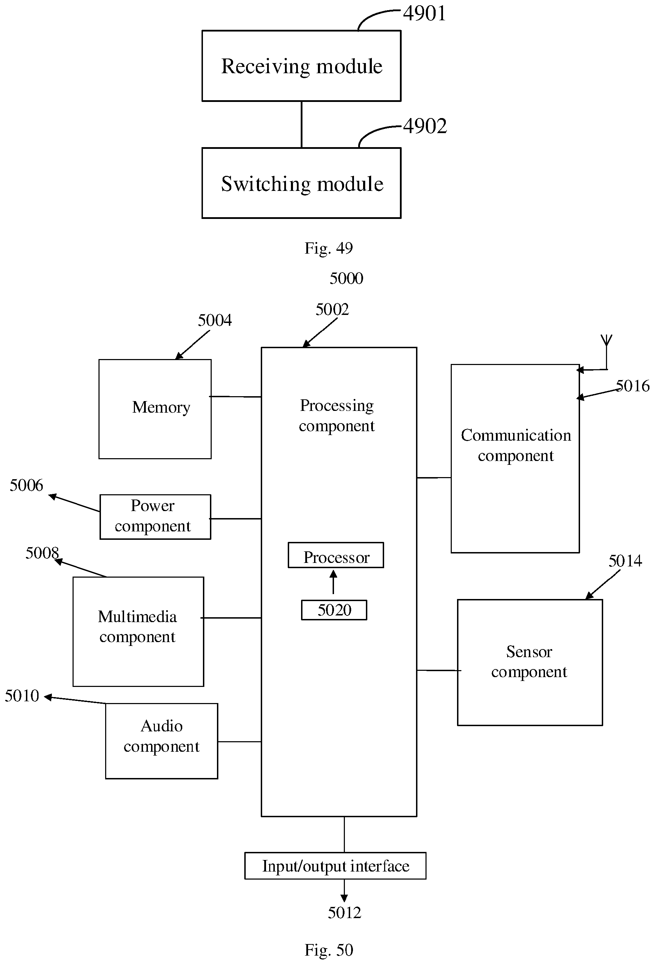

Embodiments of the present invention provide an interface processing device applied to an electronic apparatus. Fig. 49 shows a block diagram of the interface processing device according to the present invention.

The interface processing device includes: a receiving module 4901 and a switching module 4902.

The receiving module 4901 is configured to receive a touch command based on a target application program. The switching module 4902 is configured to switch a display state of the target application program from a first display state to a second display state in response to that the touch command conforms to a preset rule, in which a window layout of the first display state is different from a window layout of the second display state.

In some embodiments of the present invention, the receiving module 4901 is further configured to receive a drag command based on the target application program.

In some embodiments of the present invention, the switching module 4902 is further configured to switch the display state of the target application program from the first display state to the second display state, in response to that an endpoint of a motion trajectory corresponding to the drag command is in a preset area of a screen of the electronic apparatus.

In some embodiments of the present invention, the interface processing device further includes a first prompt module. The first prompt module is configured to prompt the window layout of the second display state, in response to that the motion trajectory corresponding to the drag command enters the preset area.

In some embodiments of the present invention, the interface processing device further includes a first display module. The first display module is configured to display the window layout of the second display state through a mask layer area of a first preset dimension.

In some embodiments of the present invention, a size of the first preset dimension is associated with the window layout of the second display state.

In some embodiments of the present invention, the interface processing device further includes a second display module. The second display module is configured to display the target application program in a second preset dimension in response to executing the touch command.

In some embodiments of the present invention, the receiving module 4901 is further configured to receive the drag command of a control displayed on the target application program, or receive the drag command of a control on an icon of the target application program.

In some embodiments of the present invention, the interface processing device further includes a first setting module. The first setting module is configured to set the window layout of the first display state and the window layout of the second display state according to the target application program.

In some embodiments of the present invention, the interface processing device further includes a second setting module. The second setting module is configured to set the window layout of the first display state and the window layout of the second display state according to a type of the electronic apparatus.

In some embodiments of the present invention, the interface processing device further includes a determination module. The determination module is configured to determine a size of the preset area according to a type of the electronic apparatus.

In some embodiments of the present invention, the interface includes a plurality of preset areas, different preset areas corresponding to different display states. The first display state is that the target application program is in a closed mode, a small window mode, a split screen mode, or a full screen mode. The second display state is that the target application program is in a small window mode, a split screen mode, or a full screen mode.

In some embodiments of the present invention, the interface includes a first area, a second area, and a third area. The first area is a preset area corresponding to the small window mode; the second area is a preset area corresponding to the split screen mode; and the third area is a preset area corresponding to the full screen mode.

In some embodiments of the present invention, the switching module 4902 is further configured to switch the display state of the target application program into the small window mode, in response to that the endpoint of the motion trajectory corresponding to the drag command is in the first area of the screen of the electronic apparatus; or switch the display state of the target application program into the split screen mode, in response to that the endpoint of the motion trajectory corresponding to the drag command is in the second area of the screen of the electronic apparatus; or switch the display state of the target application program into the full screen mode, in response to that the endpoint of the motion trajectory corresponding to the drag command is in the third area of the screen of the electronic apparatus.

In some embodiments of the present invention, the interface processing device further includes a second switching module. The second switching module is configured to switch a display state of a non-target application program from a third display state to a fourth display state in response to that the endpoint of the motion trajectory corresponding to the drag command is in the preset area of the screen of the electronic apparatus, in which a window layout of the third display state is different from a window layout of the fourth display state.

In some embodiments of the present invention, the third display state is that the non-target application is in the small window mode, the split screen mode, or the full screen mode, and the fourth display state is that the non-target application is in the small window mode, the split screen mode, the full screen mode, or the closed mode.

In some embodiments of the present invention, the second switching module is further configured to switch the display state of the non-target application program into a non-small window mode, in response to that the endpoint of the motion trajectory corresponding to the drag command is in the first area of the screen of the electronic apparatus; or switch the display state of the non-target application program into the small window mode or the split screen mode, in response to that the endpoint of the motion trajectory corresponding to the drag command is in the second area of the screen of the electronic apparatus; or switch the display state of the non-target application program into the closed mode, in response to that the endpoint of the motion trajectory corresponding to the drag command is in the third area of the screen of the electronic apparatus.

In some embodiments of the present invention, the interface processing device further includes a second prompt module. The second prompt module is configured to prompt that the target application program does not support the second display state, in case that the electronic apparatus does not support switching the display state of the target application program from the first display state to the second display state.

Regarding the interface processing device in the above embodiments, the specific ways that various modules execute operations have been described in detail in embodiments related to the interface processing method and will not be elaborated here.

Fig. 50 is a block diagram of an electronic apparatus 5000 according to an embodiment of the present invention. For example, the electronic apparatus 5000 can be a mobile phone, a computer, a digital broadcasting terminal, a message sending and receiving equipment, a game console, a tablet equipment, a medical equipment, a fitness equipment, a personal digital assistant, etc.

Referring to Fig. 50, the electronic apparatus 5000 can include one or more of following components: a processing component 5002, a memory 5004, a power component 5006, a multimedia component 5008, an audio component 5010, an input/output (I/O) interface 5012, a sensor component 5014 and a communication component 5016.

The processing component 5002 typically controls the overall operation of the electronic apparatus 5000, such as operations associated with display, telephone calls, data communication, camera operations, and recording operations. The processing component 5002 can include one or more processors 5020 to execute instructions to complete all or part of the steps of the above method. In addition, the processing component 5002 can include one or more modules to facilitate the interaction between the processing component 5002 and other components. For example, the processing component 5002 can include a multimedia module to facilitate interaction between the multimedia component 5008 and the processing component 5002.

The memory 5004 is configured to store various types of data to support operations on the electronic apparatus 5000. Examples of these data include instructions for any application program or method operated on the electronic apparatus 5000, contact data, phone book data, messages, images, videos, etc. The memory 5004 can be implemented by any type of volatile or non-volatile storage equipment or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disc.

The power component 5006 provides power to various components of the electronic apparatus 5000. The power component 5006 can include a power management system, at least one power supply, and other components associated with generating, managing, and distributing power for the electronic apparatus 5000.

The multimedia component 5008 includes a screen providing an output interface between the electronic apparatus 5000 and a user. In some embodiments, the screen can include a liquid crystal display (LCD) and a touch panel (TP). If the screen includes the touch panel, the screen can be implemented as a touch screen to receive input signals from the user. The touch panel includes at least one touch sensor to sense touches, slides and gestures on the touch panel. The touch sensor can not only sense the boundaries of the touch or slide action, but also detect the wake-up time and pressure associated with the touch or slide operation. In some embodiments, the multimedia component 5008 includes a front camera and/or a rear camera. The front camera and/or the rear camera can receive external multimedia data when the electronic apparatus 5000 is in an operating mode, such as a shooting mode or a video mode. Each front camera and rear camera can be a fixed optical lens system or have a focal length and an optical zoom capability.

The audio component 5050 is configured to output and/or input audio signals. For example, the audio component 5050 includes a microphone (MIC) that is configured to receive external audio signals when the electronic apparatus 5000 is in the operating mode, such as a call mode, a recording mode, and a speech recognition mode. The received audio signals can be further stored in the memory 5004 or transmitted through the communication component 5016. In some embodiments, the audio component 5050 further includes a speaker for outputting the audio signals.

The Input/output (I/O) interface 5012 provides an interface between the processing component 5002 and a peripheral interface module, the peripheral interface module can be a keypad, a click wheel, a button, and the like. These buttons can include, but are not limited to, a home button, a volume button, a start button, and a lock button.

The sensor component 5014 includes at least one sensor for providing state assessments of various aspects for the electronic apparatus 5000. For example, the sensor component 5014 can detect the on/off state of the electronic apparatus 5000, the relative positioning of components, such as a display and a keypad of the electronic apparatus 5000. The sensor component 5014 can also detect the position change of the electronic apparatus 5000 or a component of the electronic apparatus 5000, the presence or absence of user contact with the electronic apparatus 5000, the orientation or acceleration/deceleration of the electronic apparatus 5000 and the temperature change of the electronic apparatus 5000. The sensor component 5014 can include a proximity sensor configured to detect the presence of a nearby object without any physical contact. The sensor component 5014 can also include an optical sensor, such as a CMOS or CCD image sensor, for use in imaging applications. In some embodiments, the sensor component 5014 can also include an acceleration sensor, a gyroscope sensor, a magnetic sensor, a pressure sensor, or a temperature sensor.

The communication component 5016 is configured to facilitate wired or wireless communication between the electronic apparatus 5000 and other apparatuses. The electronic apparatus 5000 can access to a wireless network based on a communication standard, such as Wi-Fi, 2G or 3G, or a combination thereof. In an embodiment, the communication component 5016 receives broadcast signals or broadcast-related information from an external broadcast management system via a broadcast channel. In an embodiment, the communication component 5016 further includes a near field communication (NFC) module to facilitate short range communication. For example, NFC modules can be implemented based on Radio Frequency Identification (RFID) technology, Infrared Data Association (IrDA) technology, Ultra-Wide Band (UWB) technology, Bluetooth (BT) technology and other technologies.

In an embodiment, the electronic apparatus 5000 can be implemented by at least one application specific integrated circuit (ASIC), digital signal processor (DSP), digital signal processing device (DSPD), programmable logic device (PLD), field programmable gate array (FPGA), controller, microcontroller, microprocessor, or another electronic element, for executing the above methods.

In embodiments of the present invention, there is also provided a non-transitory computer-readable storage medium including instructions, such as the memory 5004 including instructions, the instructions can be executed by the processor 5020 of the electronic apparatus 5000 to complete the above methods. For example, the non-transitory computer-readable storage medium can be a ROM, a random access memory (RAM), a CD-ROM, a magnetic tape, a floppy disk, and an optical data storage equipment, etc.

For the non-transitory computer-readable storage medium, when instructions in the storage medium are executed by a processor of an electronic apparatus, the processor of the electronic apparatus can execute the interface processing method according to embodiments of the present invention.

Other embodiments of the present invention will easily occur to those skilled in the art after considering the specification and practicing the present invention disclosed herein. This application is intended to cover any variations, uses or adaptations of the present invention, which follow the general principles of the present invention and include common sense or common technical means in this technical field that are not disclosed in the present invention.

It should be understood that the present invention is not limited to the precise structures described above and shown in the drawings, and various modifications and changes can be made without departing from its scope. The scope of the present invention is limited only by the scope of the appended claims.

## Claims

1. An interface processing method, applied to an electronic apparatus (31, 111, 181, 211), and comprising:
receiving (S101, S1001, S1502, S1602, S1701) a touch command based on a target application program; and
switching (S102, S1002, S1503, S1603, S1702) a display state of the target application program from a first display state to a second display state in response to that the touch command conforms to a preset rule, wherein a window layout of the first display state is different from a window layout of the second display state.

2. The interface processing method according to claim 1, wherein receiving (S101, S1001, S1502, S1602, S1701) the touch command based on the target application program comprises:
receiving (S201, S2001, S2201, S3302, S3801, S3901, S4301, S4601) a drag command based on the target application program,
optionally, wherein receiving (S501, S801, S901) the drag command based on the target application program comprises: receiving the drag command of a control displayed on the target application program; or receiving the drag command of a control on an icon of the target application program.

3. The interface processing method according to claim 2, wherein switching (S102, S1002, S1503, S1603, S1702) the display state of the target application program from the first display state to the second display state in response to that the touch command conforms to the preset rule comprises:
switching (S202, S2003, S2204, S3303, S3802) the display state of the target application program from the first display state to the second display state, in response to that an endpoint of a motion trajectory corresponding to the drag command is in a preset area of a screen of the electronic apparatus,
optionally, wherein a size of the preset area is determined (S3301) according to a type of the electronic apparatus..

4. The interface processing method according to claim 3, further comprising:
prompting (S2002, S2202) the window layout of the second display state, in response to that the motion trajectory corresponding to the drag command enters the preset area.

5. The interface processing method according to claim 4, further comprising:
displaying (S2203) the window layout of the second display state through a mask layer area of a first preset dimension,
optionally, wherein a size of the first preset dimension is associated with the window layout of the second display state.

6. The interface processing method according to any one of claims 1-5, further comprising:
displaying (S1003) the target application program in a second preset dimension in response to executing the touch command.

7. The interface processing method according to any one of claims 1-6, further comprising:
setting (S1501) the window layout of the first display state and the window layout of the second display state according to the target application program; or
setting (S1601) the window layout of the first display state and the window layout of the second display state according to a type of the electronic apparatus.

8. The interface processing method according to any one of claims 3-7, wherein:
an interface comprises a plurality of preset areas, different preset areas corresponding to different display states;
the first display state is that the target application program is in a closed mode, a small window mode, a split screen mode, or a full screen mode; and
the second display state is that the target application program is in a small window mode, a split screen mode, or a full screen mode.

9. The interface processing method according to claim 8, wherein:
the interface comprises a first area (43), a second area (41), and a third area (42);
the first area (43) is a preset area corresponding to the small window mode;
the second area (41) is a preset area corresponding to the split screen mode; and
the third area (42) is a preset area corresponding to the full screen mode.

10. The interface processing method according to claim 9, wherein switching (S202, S2003, S2204, S3303, S3802) the display state of the target application program from the first display state to the second display state, in response to that the endpoint of the motion trajectory corresponding to the drag command is in the preset area of the screen of the electronic apparatus comprises:
switching (S502, S3902) the display state of the target application program into the small window mode, in response to that the endpoint of the motion trajectory corresponding to the drag command is in the first area of the screen of the electronic apparatus; or
switching (S802, S4302) the display state of the target application program into the split screen mode, in response to that the endpoint of the motion trajectory corresponding to the drag command is in the second area of the screen of the electronic apparatus; or
switching (S902, S4602) the display state of the target application program into the full screen mode, in response to that the endpoint of the motion trajectory corresponding to the drag command is in the third area of the screen of the electronic apparatus.

11. The interface processing method according to claim 9, further comprising:
switching (S3803) a display state of a non-target application program from a third display state to a fourth display state in response to that the endpoint of the motion trajectory corresponding to the drag command is in the preset area of the screen of the electronic apparatus, wherein a window layout of the third display state is different from a window layout of the fourth display state.

12. The interface processing method according to claim 11, wherein the third display state is that the non-target application is in the small window mode, the split screen mode, or the full screen mode, and the fourth display state is that the non-target application is in the small window mode, the split screen mode, the full screen mode, or the closed mode.

13. The interface processing method according to claim 12, wherein switching (S3803) the display state of the non-target application program from the third display state to the fourth display state in response to that the endpoint of the motion trajectory corresponding to the drag command is in the preset area of the screen of the electronic apparatus comprises:
switching (S3903) the display state of the non-target application program into a non-small window mode, in response to that the endpoint of the motion trajectory corresponding to the drag command is in the first area of the screen of the electronic apparatus; or
switching (S4303) the display state of the non-target application program into the small window mode or the split screen mode, in response to that the endpoint of the motion trajectory corresponding to the drag command is in the second area of the screen of the electronic apparatus; or
switching (S4603) the display state of the non-target application program into the closed mode, in response to that the endpoint of the motion trajectory corresponding to the drag command is in the third area of the screen of the electronic apparatus.

14. The interface processing method according to any one of claims 1-13, further comprising:
prompting (S1703) that the target application program does not support the second display state, in case that the electronic apparatus does not support switching the display state of the target application program from the first display state to the second display state.

15. An electronic apparatus, comprising:
a processor; and
a memory for storing instructions executable by the processor;
wherein the processor is configured to execute the instructions in the memory to implement the interface processing method according to any one of claims 1-14.
